(19) Europäisches Patentamt / European Patent Office / Office européen des brevets

(11) **EP 3 202 147 B1**

(12) **FASCICULE DE BREVET EUROPEEN**

(45) Date de publication et mention de la délivrance du brevet:
**09.11.2022 Bulletin 2022/45**

(21) Numéro de dépôt: **15788115.2**

(22) Date de dépôt: **30.09.2015**

(51) Classification Internationale des Brevets (IPC):
**H04N 19/436** (2014.01)  **H04N 19/139** (2014.01)
**H04N 19/119** (2014.01)  **H04N 19/147** (2014.01)
**H04N 19/513** (2014.01)  **H04N 19/96** (2014.01)
**H04N 19/19** (2014.01)  **H04N 19/192** (2014.01)
**H04N 19/40** (2014.01)

(52) Classification Coopérative des Brevets (CPC):
**H04N 19/119; H04N 19/139; H04N 19/147;**
**H04N 19/19; H04N 19/192; H04N 19/40;**
**H04N 19/436; H04N 19/513; H04N 19/96**

(86) Numéro de dépôt international:
**PCT/FR2015/052610**

(87) Numéro de publication internationale:
**WO 2016/051083 (07.04.2016 Gazette 2016/14)**

(54) **PROCÉDÉ DE TRANSCODAGE DE DONNÉES VIDÉO À FUSION D'UNITÉS DE CODAGE, PROGRAMME INFORMATIQUE, MODULE DE TRANSCODAGE ET ÉQUIPEMENT DE TÉLÉCOMMUNICATIONS ASSOCIÉS**

VERFAHREN ZUR UMCODIERUNG VON VIDEODATEN MIT FUSION VON CODIERUNGSEINHEITEN, COMPUTERPROGRAMM, UMCODIERUNGSMODUL UND DAMIT ASSOZIIERTE TELEKOMMUNIKATIONSAUSRÜSTUNG

METHOD OF TRANSCODING VIDEO DATA WITH FUSION OF CODING UNITS, COMPUTER PROGRAM, TRANSCODING MODULE AND TELECOMMUNICATIONS EQUIPMENT ASSOCIATED THEREWITH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.09.2014 FR 1459324**

(43) Date de publication de la demande:
**09.08.2017 Bulletin 2017/32**

(73) Titulaires:
- **Institut Mines-Télécom**
  **75634 Paris Cedex 13 (FR)**
- **Centre National de la Recherche Scientifique (C.N.R.S.)**
  **75016 Paris (FR)**

(72) Inventeurs:
- **MORA, Elie Gabriel**
  **75004 Paris (FR)**
- **CAGNAZZO, Marco**
  **94250 Gentilly (FR)**
- **DUFAUX, Frédéric**
  **92000 Nanterre (FR)**

(74) Mandataire: **Nony**
**11 rue Saint-Georges**
**75009 Paris (FR)**

(56) Documents cités:
**WO-A1-2014/137268    US-A1- 2011 170 608**

- **EDUARDO PEIXOTO ET AL: "A complexity-scalable transcoder from H.264/AVC to the new HEVC codec", IMAGE PROCESSING (ICIP), 2012 19TH IEEE INTERNATIONAL CONFERENCE ON, IEEE, 30 septembre 2012 (2012-09-30), pages 737-740, XP032333280, DOI: 10.1109/ICIP.2012.6466965 ISBN: 978-1-4673-2534-9**

- PEIXOTO EDUARDO ET AL: "Fast H.264/AVC to HEVC transcoding based on machine learning", 2014 INTERNATIONAL TELECOMMUNICATIONS SYMPOSIUM (ITS), IEEE, 17 août 2014 (2014-08-17), pages 1-4, XP032677524, DOI: 10.1109/ITS.2014.6947999
- XING PEIYIN ET AL: "A coding unit classification based AVC-to-HEVC transcoding with background modeling for surveillance videos", 2013 VISUAL COMMUNICATIONS AND IMAGE PROCESSING (VCIP), IEEE, 17 novembre 2013 (2013-11-17), pages 1-6, XP032543648, DOI: 10.1109/VCIP.2013.6706393
- LUO RUI ET AL: "Fast AVS to HEVC transcoding based on ROI detection using visual characteristics", 2014 IEEE INTERNATIONAL SYMPOSIUM ON BROADBAND MULTIMEDIA SYSTEMS AND BROADCASTING, IEEE, 25 juin 2014 (2014-06-25), pages 1-6, XP032635883, DOI: 10.1109/BMSB.2014.6873495
- PHILIPP HELLE ET AL: "Block Merging for Quadtree-Based Partitioning in HEVC", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 décembre 2012 (2012-12-01), pages 1720-1731, XP011487155, ISSN: 1051-8215, DOI: 10.1109/TCSVT.2012.2223051
- GORDON C ET AL: "Wavefront Parallel Processing for HEVC Encoding and Decoding", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-F274, 1 janvier 2011 (2011-01-01), XP030009297,

**Description**

L'invention concerne un procédé de transcodage d'un flux binaire contenant des données vidéo dans un premier format en un flux binaire contenant lesdites données vidéo dans un deuxième format.

Le transcodage de données vidéo est utilisé dans de nombreuses applications, par exemple pour augmenter la compacité des données afin d'en faciliter la diffusion ou encore pour en permettre la restitution sur des dispositifs d'affichage ne prenant pas en charge certains formats.

Il existe plusieurs techniques de transcodage, dont une technique dite « Full Decode-Full Encode », qui vient de l'anglais et signifie décodage intégral-encodage intégral. Dans cette méthode, les données sont décodées puis intégralement ré-encodées dans le format ciblé. Cette technique présente les avantages d'être indépendante du format initial et du format ciblé et de donner la meilleure efficacité de codage, mais présente en revanche l'inconvénient majeur de requérir une importante puissance de calcul et d'être lente lors de sa mise en œuvre. De fait, elle est inadaptée à certaines applications, en particulier aux applications temps-réel dans lesquelles la rapidité du transcodage est un critère crucial.

D'autres procédés de transcodage ont été développés. Ces procédés reposent essentiellement sur un principe d'association de modes de codage et/ou sur un principe de réutilisation de vecteurs de mouvement associés à des unités de codage de la structure de codage de chaque trame des données vidéo dans le premier format.

Le principe d'association de modes de codage implique la détermination de la forme précise des unités de codage du deuxième format par application d'une limite aux subdivisions possibles des unités de codage, ou encore en n'évaluant pas certains modes de codage ou certaines partitions.

Le principe de réutilisation des vecteurs de mouvement implique la mise en œuvre d'un procédé d'estimation de mouvement des unités de codage dans lequel l'estimation opérée pour les unités de codage codées selon le mode Inter est simplifiée en évitant de tester certaines positions.

Ces procédés présentent également des inconvénients. En effet, dans ces procédés, la construction de la structure de codage que les trames auront dans le deuxième format peut rester particulièrement complexe. En outre, certains de ces procédés de codage sont à leurs tours inadaptés à certaines applications.

Des documents visant à représenter l'état de l'art sont:

WO 2014/137268 A1 (ERICSSON TELEFON AB L M [SE]) 12 septembre 2014 (2014-09-12), décrivant un procédé de transcodage vidéo où un espace de recherche spécifique de possibles unités de codage intermédiaires est appliqué pour chaque unité de codage d'entrée; et,
EDUARDO PEIXOTO ET AL: "A complexity-scalable transcoder from H.264/AVC to the new HEVC codec", IMAGE PROCESSING (ICIP), 2012 19TH IEEE INTERNATIONAL CONFERENCE ON, IEEE, 30 septembre 2012 (2012-09-30), pages 737-740, XP032333280, DOI: 10.1109/ ICIP.2012.6466965 ISBN: 978-1-4673-2534-9, décrivant un procédé de transcodage vidéo où une unité d'entrée de codage est séparée en plusieurs unités de codage intermédiaires utilisant les conditions C1 et C2 comme définies ci-après dans l'invention.

L'invention vient améliorer la situation.

A cet effet, l'invention concerne un procédé de transcodage d'un flux binaire contenant des données vidéo dans un premier format en un flux binaire contenant lesdites données vidéo dans un deuxième format, les données vidéo comprenant des trames, lesdites trames étant, dans le premier format, divisées en premières unités de codage couvrant chacune une région de la trame et définissant pour chaque trame une première structure de codage, et étant, dans le deuxième format, divisées en deuxièmes unités de codage définissant pour chaque trame une deuxième structure de codage, le procédé comprenant :

- une étape de décodage du flux binaire fournissant des données vidéo décodées, des données représentatives de la première structure de codage des trames et, pour chacune des premières unités de codage, des données de prédiction, les données de prédiction d'au moins une première unité de codage comprenant un vecteur de mouvement, et
- une étape de ré-encodage au cours de laquelle les données vidéo décodées sont encodées dans le deuxième format.

En particulier, lors de l'étape de ré-encodage, pour au moins une trame des données vidéo:

- on construit une structure de codage intermédiaire comprenant des unités de codage intermédiaires construites chacune pour correspondre à la fusion d'une ou plusieurs premières unités de codage couvertes par ladite unité de codage intermédiaire lorsqu'une première condition est vérifiée, première condition selon laquelle au moins une métrique de dissimilarité associée à la ou aux premières unités de codage considérées et déterminée à partir des vecteurs de mouvement desdites premières unités de codage est inférieure à un seuil prédéterminé, au moins une unité de codage intermédiaire correspondant à la fusion d'au moins deux premières unités de codage,
- on attribue à chacune des unités de codage intermédiaires des données de prédiction construites en fonction des données de prédictions de la ou des premières unités de codage fusionnées pour former ladite unité de codage intermédiaire, et

- on ré-encode dans le deuxième format les données vidéos décodées en construisant la deuxième structure de codage en fonction de la structure de codage intermédiaire.

Ainsi, la construction de la structure de codage du deuxième format devient directement impactée par la structure de codage du premier, ce qui limite la complexité du transcodage. Notamment, la taille des premières unités de codage constitue d'une certaine manière une taille minimale pour les unités de codage intermédiaires.

En outre, ce procédé de transcodage est indépendant de la taille maximale des unités de codage dans les deux formats, ce qui rend ce procédé adapté à un grand nombre de formats. Par ailleurs, le procédé de transcodage ne nécessite pas de puissance de calcul particulièrement importante, ce qui contribue à le rendre approprié à un grand nombre d'applications dont les applications temps-réel.

Selon un aspect de l'invention, pour la construction de la structure de codage intermédiaire :

- on divise la ou lesdites trames en unités de codage intermédiaires de taille maximale choisie, chaque unité de codage intermédiaire de taille maximale couvrant un ensemble de premières unités de codage au sein de la première structure de codage,

- a) pour chaque unité de codage intermédiaire de taille maximale, et à partir des données de prédiction des premières unités de codage couvertes par ladite unité de codage intermédiaire de taille maximale, on évalue selon un ordre prédéterminé la ou les métriques de dissimilarité respectivement associées à chacun des éléments d'un ensemble de partitions prédéterminées de ladite unité de codage intermédiaire de taille maximale,

- b) pour chaque unité de codage intermédiaire (uci), on forme ladite unité de codage intermédiaire (uci) en conférant à ladite unité de codage intermédiaire la première partition parmi ledit premier ensemble de partitions (P) prédéterminées pour laquelle l'unique métrique ou bien une proportion supérieure à une valeur non nulle choisie des métriques de dissimilarité associées est inférieure au seuil prédéterminé si ladite première partition existe,

- c) si ladite première partition n'existe pas pour ladite unité de codage de taille maximale, on subdivise ladite unité de codage intermédiaire en n unités de codage intermédiaires de taille strictement inférieure à ladite taille maximale choisie, et

- d) on répète les étapes a), b) et c) pour chaque unité de codage intermédiaire nouvellement formée et ce jusqu'à obtenir des unités de codage intermédiaires ayant une taille minimale prédéterminée.

Cet algorithme permet notamment d'obtenir une structure de codage intermédiaire de façon simple et fiable, et permet d'aboutir à une deuxième structure de codage qui exploite plus efficacement sa corrélation avec la structure de codage intermédiaire ainsi créée. En outre, cet algorithme permet la construction des unités de codage intermédiaires de manière entièrement parallélisable, c'est-à-dire que les différentes unités de codage intermédiaires peuvent être construites en parallèle les unes des autres, par exemple via un ou plusieurs processeurs ou encore via un processeur multi-cœurs.

Dans une réalisation particulière, ledit ensemble de partitions prédéterminées comprend au moins une partition en m régions de tailles strictement inférieures à la taille de l'unité de codage intermédiaire considérée, une métrique de dissimilarité étant associée à chacune desdites m régions.

Selon un autre aspect faisant partie intégrale de l'invention, la métrique de dissimilarité entre les vecteurs de mouvement des premières unités de codage s'exprime sous la forme $\sqrt{\sigma_x^2 + \sigma_y^2}$, ladite métrique de dissimilarité étant déterminée comme inférieure audit seuil prédéterminé lorsque la relation $\sqrt{\sigma_x^2 + \sigma_y^2} \leq T$ est vérifiée, où $\sigma_x$ et $\sigma_y$ sont des écarts-types estimés sur l'ensemble des composantes des vecteurs de mouvement des premières unités de codage respectivement dans une direction horizontale et dans une direction verticale de la trame comprenant lesdites unités de codage, et T est ledit seuil prédéterminé.

La métrique ainsi définie ainsi que son évaluation sont ainsi simples et fiables, ce qui contribue à limiter la puissance de calcul requise pour la mise en œuvre du procédé selon l'invention.

Selon un autre aspect faisant partie intégrale de l'invention, les vecteurs de mouvement de tout ou partie des premières unités de codage pointent chacun vers une trame de référence, et on détermine si la première condition est vérifiée uniquement si une deuxième condition est vérifiée, deuxième condition selon laquelle les vecteurs de mouvement des premières unités de codage considérées pointent vers une même trame de référence.

Ceci permet également de limiter la puissance de calcul requise dans la mesure où l'évaluation de la métrique de dissimilarité n'est opérée que si la deuxième condition ainsi définie est vérifiée. En outre, cela permet de ne comparer que des vecteurs susceptibles d'être semblables.

Selon un autre aspect de l'invention, les vecteurs de mouvement de toute ou partie des premières unités de codage pointent chacun vers une trame de référence, on construit pour au moins une desdites premières unités de codage au moins un vecteur de mouvement pondéré en fonction d'un vecteur de mouvement de ladite première unité de codage et de l'intervalle de temps entre la trame de la première unité de codage considérée et la trame de référence pointée par ledit vecteur de mouvement, et on détermine la métrique de dissimilarité associée à une ou plusieurs unités de codage couvertes par l'unité de codage intermédiaire considérée à partir d'un ou plusieurs vecteurs de mouvement pondérés.

Dans une réalisation particulière, sont associées aux trames des données vidéos deux listes de trames de référence à l'une et/ou à l'autre desquelles les vecteurs de mouvement des unités de codage renvoient, et la vérification de la première condition ou, lorsqu'elle appliquée, de la deuxième condition, n'est analysée que si une troisième condition est vérifiée, troisième condition selon laquelle les vecteurs de mouvement des premières unités de codage correspondantes pointent vers des trames de référence appartenant à la ou les mêmes listes.

Ceci permet d'améliorer la rapidité du transcodage dans la mesure où on la première ou la deuxième condition n'est évaluée que si on a déterminé préalablement que cette évaluation est effectivement pertinente.

Dans un mode de réalisation, l'analyse de la première condition, de la deuxième condition et/ou de la troisième condition, n'est réalisée que si une quatrième condition est vérifiée, quatrième condition selon laquelle les données de prédiction des premières unités de codage correspondantes comprennent toutes au moins un vecteur de mouvement.

Ceci permet d'améliorer la rapidité d'encodage dans la mesure où ces conditions ne sont évaluées que dans le cas où les unités de codage considérées sont codées dans un mode de codage Inter, c'est-à-dire un encodage s'appuyant sur une ou plusieurs trames de référence.

Dans une réalisation particulière, lors de l'étape de ré-encodage, on divise la ou chaque trame en deuxièmes unités de codage de taille maximale choisie, et, pour chaque deuxième unité de codage de taille maximale, on code ladite deuxième unité de codage de taille maximale choisie selon les cas de figure suivants :

- e) si l'unité de codage intermédiaire colocalisée, c'est-à-dire couvrant la même région de la trame, dans la structure de codage intermédiaire ne comprend pas d'unité de codage intermédiaire de taille strictement inférieure, on code ladite deuxième unité de codage selon une partition choisie parmi un deuxième ensemble de partitions prédéterminé en fonction de la partition de l'unité de codage intermédiaire colocalisée, ledit ensemble n'incluant pas une subdivision de ladite deuxième unité de codage en deuxièmes unités de codage de taille strictement inférieure, ladite partition choisie minimisant une fonction de coût de codage choisie,

- f) si l'unité de codage intermédiaire colocalisée comprend des unités de codage intermédiaires de taille strictement inférieure, on considère un troisième ensemble de partitions prédéterminé et au moins une subdivision de ladite deuxième unité de codage en deuxièmes unités de codage de tailles strictement inférieures, on détermine la structure de codage parmi ledit troisième ensemble de partitions et ladite au moins une subdivision qui fournit une valeur minimale de ladite fonction de coût de codage, et :

- si ladite structure de codage est une partition du troisième ensemble de partitions, on code l'unité de codage intermédiaire selon ladite structure de codage,

- si ladite structure de codage est la ou l'une de ladite au moins une subdivision en deuxièmes unités de codage de tailles strictement inférieures, on applique les étapes e) et f) à chacune des deuxièmes unités de codage de taille strictement inférieure, et ce jusqu'à considérer des deuxièmes unités de codage présentant une taille minimale déterminée à partir de la taille des unités de codage intermédiaires colocalisées.

Ceci permet de limiter la complexité du procédé de transcodage dans la mesure où les partitions des deuxièmes unités de codage sont limitées par les partitions des unités de codage intermédiaires. En outre, la structure de codage de chaque deuxième unité de codage est ainsi construite à partir d'un nombre limité de structures de codage possibles, ce qui réduit la complexité de l'encodage.

Dans un mode de réalisation, le deuxième format est le format HEVC, et le premier format est le format AVC, ou encore le format MPEG-2.

L'invention concerne également un programme informatique caractérisé en ce qu'il comporte des instructions pour la mise en œuvre du procédé défini ci-dessus, lorsque ce programme est exécuté par un processeur.

En outre, l'invention concerne un module de transcodage comme défini dans la revendication 10.

Enfin, l'invention concerne un équipement de télécommunication comportant une interface pour recevoir un flux binaire contenant des données vidéo dans un premier format, caractérisé en ce qu'il comprend un module de transcodage tel que défini ci-dessus.

L'invention sera mieux comprise à la lecture de la description détaillée qui va suivre, donnée uniquement à titre d'exemple, et faite en référence aux Figures annexées, sur lesquelles :

- la Figure 1 est une illustration schématique d'un équipement de télécommunication et d'un module de transcodage selon l'invention ;
- les Figures 2a à 2c illustrent des structures de codage d'une trame de données vidéo ;
- les Figures 3 et 4 illustrent un procédé de transcodage selon l'invention ; et

- la Figure 5 illustre un premier ensemble de partitions possibles d'une unité de codage intermédiaire construite lors du procédé selon l'invention.
- La Figure 6 illustre des deuxièmes ensembles de partition d'une deuxième unité de codage construite lors du procédé selon l'invention ; et
- La Figure 7 illustre un troisième ensemble de partitions et une subdivision d'une deuxième unité de codage construite lors du procédé selon l'invention.

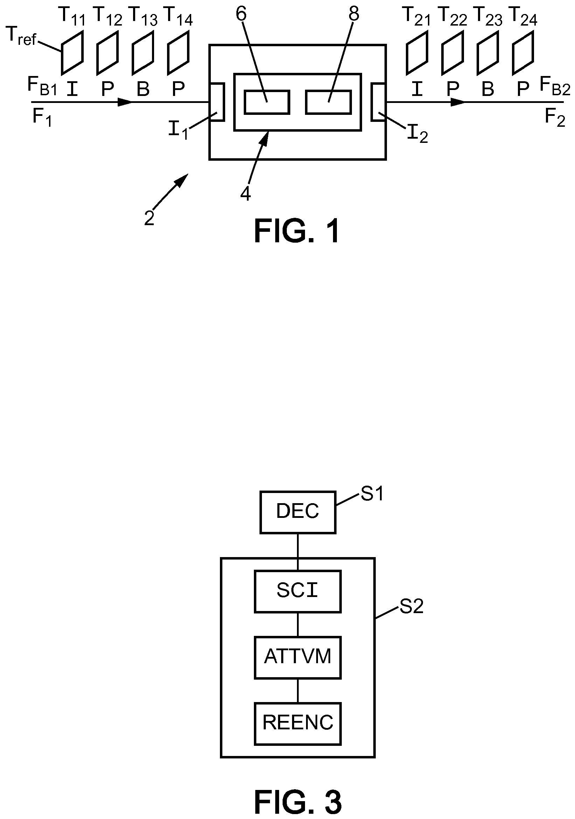

La Figure 1 illustre un équipement de télécommunication 2 selon l'invention, ci-après équipement 2.

L'équipement 2 comprend une première interface I1 adaptée pour recevoir un flux binaire FB1 de données vidéo dans un premier format F1 et une deuxième interface I2 adaptée pour fournir un flux binaire FB2 de données vidéo dans un deuxième format F2 à un autre équipement auquel l'équipement 2 est connecté. En outre, l'équipement 2 comprend un module de transcodage 4 selon l'invention.

L'équipement 2 est par exemple un élément du groupe formé par : un ordinateur, un téléphone portable, une tablette tactile, un poste de télévision, un routeur, un équipement adapté pour connecter un autre équipement à Internet, un module de stockage de données.

Le module de transcodage 4 est configuré pour transformer le flux binaire FB1 présentant le premier format F1 en le deuxième flux binaire FB2 présentant le deuxième format F2.

Préférentiellement, les deux formats F1 et F2 sont distincts l'un de l'autre.

En outre, préférentiellement, le deuxième format F2 est le format HEVC, acronyme anglophone de « High-Efficiency Video Coding », pour « Codage Vidéo de Haute Efficacité ». HEVC est un standard qui a vocation à remplacer le format AVC, acronyme anglophone de « Advanced Video Coding » pour « Codage Vidéo Avancé », et également connu sous le nom de H.264/MPEG-4 AVC. Par ailleurs, préférentiellement, le premier format est le format AVC, ou encore le format MPEG-2, pour « Moving Pictures Expert Group-2 », qui signifie « Groupe d'Experts en Films ». Toutefois, d'autres formats sont envisageables pour les premier et deuxième formats, les conditions d'application de l'invention étant fournies ci-après.

De façon générale, les données vidéo sont organisées en trames, ou images. Ces trames comprennent un ensemble de pixels auxquels sont associées des valeurs de chrominance et de luminance qui sont restituées par un dispositif d'affichage pour l'affichage des trames. Aussi, de nombreux formats d'encodage visent à encoder toutes ces informations non pas de manière brute, mais par recours à des méthodes prédictives par lesquelles on reconstitue le contenu de sous-parties des trames à partir du contenu d'autres régions de la même trame ou de trames différentes.

Plus précisément, on distingue les prédictions dites « Intra », qui reposent sur des prédictions spatiales du contenu d'une région d'une trame à partir du contenu d'une autre région de cette même trame, et les prédictions dites « Inter », qui reposent sur une prédiction temporelle du contenu de régions d'une trame à partir du contenu d'une région d'une ou plusieurs autres trames.

Ces types de prédiction Inter ou Intra peuvent être appliqués à une trame entière, ou de manière sélective pour certaines régions d'une trame, d'autres régions de cette trame présentant un autre type de prédiction.

A noter qu'on distingue :

- les trames I, ou Intra, qui ne contiennent que des unités de codage codées en Intra,
- les trames P, ou Inter, qui contiennent ou sont constituées d'unités de codage prédites à partir d'une trame précédemment codée, et
- les trames B, ou bidirectionnelles, qui contiennent ou sont constituées d'unités de codage prédites à partir de deux trames précédemment codées.

Dans certains formats tels l'HEVC, cette distinction s'opère à un niveau de granularité plus fin que celui d'une trame : les trames sont divisées en tranches (« slices » en anglais), chaque tranche étant de type I, P ou B.

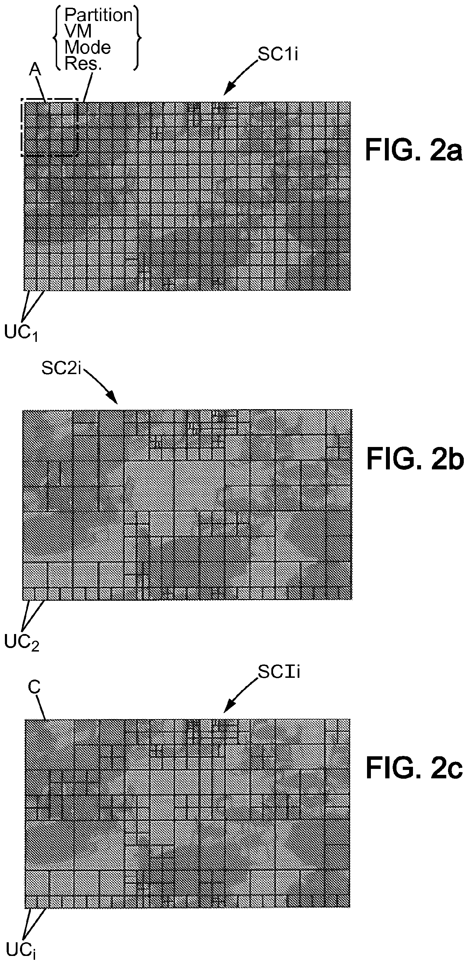

En référence aux Figures 2a à 2c, les trames sont plus précisément organisées en unités de codage correspondant chacune à une région de la trame et définissant pour chaque trame une structure de codage. A noter que les trames sont repérées par des indices 1i et 2i, le premier entier indexant le format, deux trames de même indice i correspondant à la même image mais n'étant pas tout à fait identiques du fait de leurs encodages respectifs dans des formats différents.

La Figure 2a illustre une structure de codage d'une trame $T_{1i}$ dans le premier format F1, ci-après première structure de codage SC1i.

La première structure de codage SC1i de la trame T1i comprend une pluralité de premières unités de codage uc1 correspondant chacune à une région de la trame. En pratique, la région de la trame couverte par une unité de codage uc1 est définie par des données fournissant par exemple le premier pixel que l'unité de codage contient et les dimensions de l'unité de codage.

Chaque unité de codage uc1 comprend en outre une taille donnée comprise entre une taille maximale $t1_{max}$ et une taille minimale $t1_{min}$. Les tailles des unités de codage sont en pixels par pixels. Les tailles maximale et minimale sont par exemple des tailles prédéterminées, par exemple par la norme définissant le premier format F1, ou encore des tailles préférentielles, par exemple lorsque la norme n'impose pas de contrainte de taille. Par exemple, la taille maximale en AVC est imposée par la norme et est de 16 pixels par 16 pixels. En outre, en HEVC, la norme n'impose pas de taille maximale, mais une taille maximale couramment utilisée est de 64 pixels par 64 pixels.

Par ailleurs, chaque unité de codage uc1 peut comprendre des unités de codage de taille strictement inférieure. En d'autres termes, une unité de codage donnée peut couvrir une partie d'une trame qui est divisée de manière plus fine en unités de codage de tailles plus petites. Par exemple, une unité de codage peut comprendre quatre unités de codage de taille inférieure.

Aux premières unités de codage uc1 composées d'unités de codage plus petites sont associées des données définissant la subdivision de cette unité de codage en ces unités de codage plus petites.

A chaque unité de codage uc1 non subdivisées, c'est-à-dire ne comprenant pas d'unités de codage de taille strictement inférieure, sont associées un mode de codage, des informations de partition, des données de prédiction et un résidu.

Le mode de codage correspond plus précisément à une information précisant le mode de prédiction utilisé pour l'unité de codage. Par exemple, le mode de prédiction est le mode Intra ou le mode Inter. Certains formats prévoient d'autres modes de prédiction, par exemple le mode SKIP en AVC, ou encore le mode MERGE en HEVC. Dans ce dernier mode, le vecteur de mouvement n'est pas estimé classiquement, mais est construit par l'intermédiaire d'une fonction appelée du fait de la déclaration de ce mode MERGE et qui fournit le vecteur de mouvement d'une unité de codage spatio-temporelle voisine choisie parmi un ensemble d'unités de codage voisines candidates.

Les informations de partition sont représentatives de la partition ou de la non-partition de l'unité de codage en régions de tailles inférieures.

Plus spécifiquement, une partition est constituée :

- d'une seule région, auquel cas la région couvre l'intégralité de l'unité de codage et présente la même taille, ou bien

- de plusieurs régions, auquel cas chaque région couvre une zone de la trame de taille plus petite que celle de l'unité de codage considérée.

A noter qu'on emploie ici et dans ce qui suit le terme de « régions » et pas d'unité de codage car ces régions ne correspondent généralement pas à une unité de codage au sens strict. En particulier, à chaque région d'une partition est associée une donnée de prédiction qui correspond, dans le cas d'un mode de codage Inter de l'unité de codage partitionnée, à des paramètres de mouvement, mais pas un mode de codage, ni un résidu. En outre, les régions peuvent présenter une forme autre que carrée, par exemple rectangulaire non carrée ou autre, à l'inverse des unités de codage qui présentent quant à elles une forme carrée.

Les paramètres de mouvement ci-dessus comprennent plus précisément un ou deux vecteur(s) de mouvement VM et un, respectivement deux indices décrits ci-dessous. Par exemple, de telles régions sont connues dans certains formats tels l'HEVC sous l'appellation de « Prediction Unit » qui signifie unité de prédiction.

Les données de prédiction sont associées à la ou les régions à partir desquelles le contenu de l'unité de codage est construit par prédiction. Le contenu des données de prédiction est donc fonction du type de prédiction (Inter ou Intra) utilisé pour l'unité de codage.

Dans le cas d'un codage en Inter, les données de prédiction comprennent au moins un vecteur de mouvement VM pour la prédiction du contenu de l'unité de codage à partir d'une autre trame $T_{ref}$ dite de référence, ainsi qu'un indice de la trame de référence $T_{ref}$ dans une liste des trames de références décrite ci-dessous. Les données de prédiction des premières unités de codage comprennent soit un vecteur de mouvement VM et l'indice de la trame de référence $T_{ref}$ associée dans le cas d'une prédiction de type P, ou bien deux vecteurs de mouvement et les indices respectifs de deux trames de référence dans le cas d'une prédiction de type B.

De manière plus spécifique, les données de prédiction d'une unité de codage codée en Inter comprennent au moins un vecteur de mouvement VM par région de la partition de cette unité de codage.

Dans le cas d'un codage en Intra, les données de prédiction correspondent à une direction de prédiction à partir de laquelle le contenu de l'unité de codage considérée est construit. A noter que les directions de prédiction peuvent être connues sous le nom de modes directionnels (« directional modes »).

Dans certains formats, chaque trame est associée à une ou deux listes de référence. Ces listes de référence comprennent des indices identifiant les trames à partir desquelles les régions de la trame considérées sont prédites. Les listes de référence respectivement associées à deux trames distinctes peuvent être identiques ou différentes. A noter aussi que dans le cas d'une prédiction Inter d'une unité de codage dans une trame de type B, les données de prédiction de cette unité de codage peuvent comprendre, pour chaque région, deux vecteurs de mouvement VM et deux indices de deux trames de référence, chacune appartenant à une liste.

Le résidu correspond à la différence entre le contenu original de la région de la trame couverte par l'unité de codage et le résultat de la prédiction de l'unité de codage. Le résidu, après transformation et quantification, est destiné à être ajouté au résultat de la prédiction pour déterminer le contenu final de la région correspondante de la trame. Dans certains modes de codage, les informations de résidu peuvent être vides, auquel cas le résidu n'est en pratiquement pas encodé, la restitution de l'unité de codage correspondante ne s'effectuant que sur la seule base de la prédiction de son contenu.

La Figure 2b illustre la structure de codage de la même trame $T_{2i}$ dans le deuxième format F2, ou deuxième structure de codage SC2i. La deuxième structure de codage SC2i comprend des deuxièmes unités de codage uc2 présentant chacune une taille donnée comprise entre une taille maximale $t2_{max}$ et une taille minimale $t2_{min}$. Par exemple, les tailles maximales $t1_{max}$ et $t2_{max}$ et/ou les tailles minimales $t1_{min}$ et $t2_{min}$ sont différentes.

Aux deuxièmes unités de codage uc2 qui ne comprennent pas de deuxièmes unités de codage plus petites sont également associées des données de prédiction, un mode de codage et un résidu.

En outre, les premières unités de codage uc1 et/ou les deuxièmes unités de codage qui ne comprennent pas d'unités de codage de taille strictement inférieure peuvent toutefois présenter une partition en régions qui ne sont pas à proprement parler des unités de codage mais auxquelles sont associées à chaque région de la partition un ou deux vecteurs de mouvement VM.

A noter en outre que les unités de codage d'un format donné peuvent être connues sous un nom spécifique. Par exemple, dans le format AVC, les unités de codage sont connues sous le nom de « macroblocks » MB, « pour macroblocs ». Dans le format HEVC, les unités de codage peuvent se présenter sous plusieurs noms et être de types variables. Par exemple, on distingue ainsi les CTU, ou Coding Tree Units (pour «unités de codage d'arbre») qui correspondent aux macroblocs MB en AVC (avec une taille maximale pouvant être différente de celle des macroblocs MB), et les CU pour Coding Units (« unités de codage »).

En référence à la Figure 1, le module de transcodage 4 comprend un module de décodage 6 et un module de ré-encodage 8.

Le module de décodage 6 est adapté pour décoder le flux binaire FB1 présentant le premier format F1. Ce décodage fournit des données vidéo décodées (en utilisant le résidu codé dans le flux binaire FB1), des données représentatives de la première structure de codage des trames et, pour tout ou partie des premières unités de codage, le mode de codage, les informations de partition et les données de prédiction associés.

A noter que préférentiellement, les données de prédiction d'au moins une première unité de codage comprennent un vecteur de mouvement VM, ce qui indique qu'au moins une unité de codage n'est pas codée en prédiction Intra.

Quant à lui, le module de ré-encodage 8 est adapté pour encoder les données vidéo décodées dans le deuxième format.

Le module de transcodage 4 est plus spécifiquement configuré pour mettre en œuvre le procédé de transcodage détaillé ci-dessous.

Au cours d'une étape S1, on décode les données vidéo contenues dans le flux binaire FB1 se trouvant dans le premier format 1. Comme indiqué précédemment, ce décodage fournit d'une part les données vidéo décodées, mais aussi la première structure de codage des différentes trames $T_{i1}$ et les données associées à chacune des premières unités de codage uc1 , dont le mode de codage, les informations de partition et les données de prédiction associées .

Au cours d'une étape S2, on ré-encode les données vidéo dans le deuxième format F2.

Pour ce faire, selon l'invention, pour au moins une trame des données vidéo, on construit une structure de codage intermédiaire SCIi comprenant des unités de codage intermédiaires uci. Chaque unité de codage intermédiaire est construite à partir de la première structure de codage SC1i et correspond à la fusion d'une ou plusieurs premières unités de codage uc1 couvertes par ladite unité de codage intermédiaire uci lorsqu'une première condition C1 est vérifiée. La construction de la structure intermédiaire SCIi est décrite plus en détail ci-après. La première condition C1 est vérifiée lorsqu'au moins une métrique de dissimilarité D associée à la ou les premières unités de codage uc1 considérées, c'est-à-dire correspondant à la même région de la trame, et déterminée à partir des vecteurs de mouvement VM desdites premières unités de codage est inférieure à un seuil T non nul prédéterminé.

La métrique D choisie s'exprime sous la forme $\sqrt{\sigma_x^2 + \sigma_y^2}$ , où $\sigma_x$ et $\sigma_y$ sont des écarts-types estimés sur l'ensemble des composantes des vecteurs de mouvement VM des premières unités de codage uc1 considérées respectivement dans une direction horizontale et dans une direction verticale de la trame comprenant lesdites unités de codage. En d'autres termes, la métrique D est construite comme racine carrée de la somme de la variance des composantes horizontales du ou des vecteurs de mouvement VM considérés et de la variance des composantes verticales de ces vecteurs de mouvement VM.

On remarque ici que lorsqu'on évalue la métrique D sur un seul vecteur de mouvement, cette métrique est nulle.

Préférentiellement, au moins une unité de codage intermédiaire uci correspond à la fusion d'au moins deux premières unités de codage.

En outre, la valeur précise du seuil T est déterminée en fonction de critères connus de l'homme du métier comme le compromis recherché entre la réduction de la complexité du transcodage et la qualité obtenue par restitution que les données encodées dans le deuxième format doivent satisfaire. Ce compromis est par exemple variable d'une application à l'autre, telle que par exemple la visioconférence, le montage vidéo, etc.

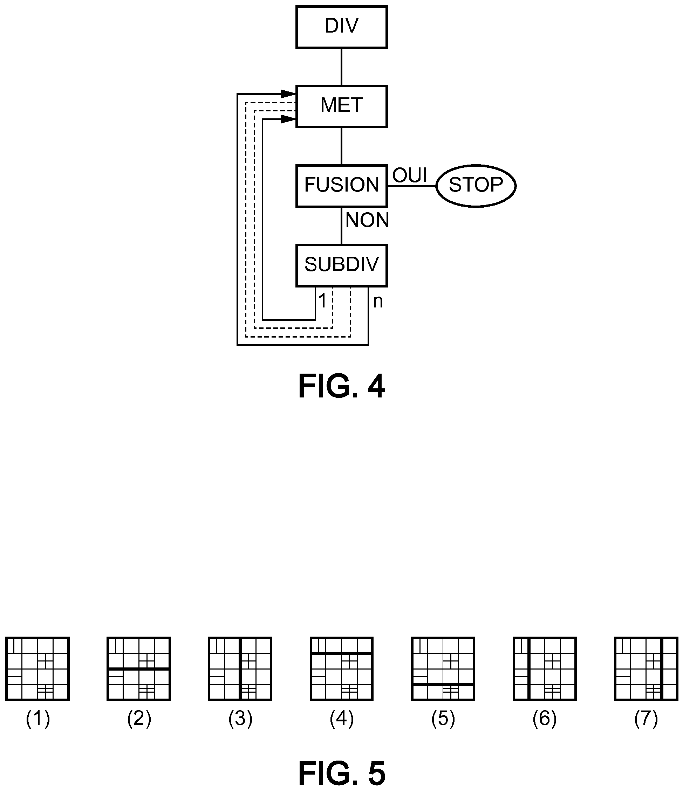

En référence aux Figures 2c et 4, pour la construction effective de la structure de codage intermédiaire SCI, on procède de manière itérative comme suit.

Initialement, lors d'une étape DIV, on divise la trame considérée en unités de codage intermédiaires uci de taille maximale choisie $ti_{max}$, chaque unité de codage intermédiaire uci de taille maximale $ti_{max}$ couvrant une zone de la trame couverte par un ensemble de premières unités de codage au sein de la première structure de codage SC1i. En d'autres termes, en référence aux Figures 2a et 2c, la zone C correspond à la première région de la trame considérée. Cette zone C correspond dans la structure de codage intermédiaire SCIi à une unité de codage intermédiaire. Cette zone C correspond également à la zone A (entourée de pointillés) de la Figure 2a, qui est, elle, couverte par un certain nombre (en l'occurrence ici 16) de premières unités de codage uc1. A noter que les zones A et C sont dites « colocalisées » l'une par rapport à l'autre, c'est-à-dire qu'elles couvrent toutes les deux la même région de la même trame.

La taille maximale $ti_{max}$ peut être choisie quelconque. Toutefois, préférentiellement, $ti_{max}$ est choisie en fonction de la taille maximale $t2_{max}$ des deuxièmes unités de codage.

Lors d'une étape MET, pour chaque unité de codage intermédiaire uci de taille maximale $ti_{max}$, et à partir des données de prédiction des premières unités de codage uc1 couvertes par ladite unité de codage intermédiaire uci, on évalue selon un ordre prédéterminé la ou les métriques de dis similarité D respectivement associées à chacun des éléments d'un premier ensemble de partitions P1 prédéterminées de l'unité de codage considérée.

La Figure 5 illustre un exemple d'ensemble P1 qui contient 7 partitions dont une partition couvrant l'intégralité de l'unité de codage considérée, 3 partitions horizontales dont deux partitions asymétriques et 3 partitions verticales dont deux partitions asymétriques. En pratique, les partitions de l'ensemble P1 considéré pour une unité de codage uci donnée sont déterminées en fonction des caractéristiques du deuxième format F2, comme la taille maximale $t2_{max}$, ou encore les partitions autorisées pour les unités de codage de ce format F2.

A noter que chaque unité de codage intermédiaire uci est associée à une unique métrique de dissimilarité D ou bien plusieurs métriques de dissimilarité en fonction notamment de la partition de cette unité de codage intermédiaire qui est couramment évaluée. Par exemple, chaque partition est associée à un nombre de métriques égal au nombre de régions de l'unité de codage définies par cette partition.

Lors d'une étape FUSION, on construit alors chaque unité de codage intermédiaire uci en conférant à ladite unité de codage intermédiaire la première partition parmi ledit ensemble de partitions prédéterminées pour laquelle l'unique métrique associée ou bien une proportion supérieure à une valeur non nulle choisie des métriques D associées est inférieure au seuil prédéterminé si ladite première partition existe.

Cette valeur choisie est par exemple un pourcentage, par exemple 75%. Toutefois, préférentiellement, cette proportion est égale à 100%. En d'autres termes, si la métrique associée ou bien chacune des métriques D associées est inférieure à T, on fusionne les unités de codage couvertes par l'unité de codage intermédiaire considérée en conférant à cette unité de codage intermédiaire la partition (1), et le traitement s'arrête pour l'unité de codage considérée. Ceci permet également de réduire la complexité du transcodage tout en limitant la perte de qualité associée. La description est par suite faite en référence à cette valeur prise égale à 100%.

En référence à la Figure 5, en d'autres termes, on calcule d'abord la ou les métriques D associées à l'unité de codage entière (1). Dans cet exemple, la partition (1) est associée à une unique métrique. Aussi, si la métrique associée est inférieure à T, on fusionne les unités de codage couvertes par l'unité de codage intermédiaire considérée en conférant à cette unité de codage intermédiaire la partition (1), et le traitement s'arrête pour l'unité de codage considérée.

Ici, si la métrique de la partition (1) n'est pas inférieure à T, on évalue la ou les métriques de la partition (2) (par exemple pour la partition (2) une métrique est associée à chacune des deux régions). Dans le cas où la valeur choisie est égale à 100%, si les métriques sont toutes deux inférieures à T, on confère à l'unité intermédiaire la partition (2). Si tel n'est toujours pas le cas, on procède ainsi jusqu'à considérer la partition (7).

Si ladite première partition n'existe pas, c'est-à-dire qu'aucune des partitions de l'ensemble P1 n'aboutit à une ou des métriques toutes inférieures à T, on subdivise ladite unité de codage intermédiaire en n unités de codage intermédiaires de taille strictement inférieure à ladite taille maximale choisie. Par exemple, on subdivise l'unité de codage en 4 unités de codage plus petites. Puis, on répète les étapes ci-dessus pour chaque unité de codage intermédiaire ainsi formée, et ce jusqu'à éventuellement considérer des unités de codage intermédiaires ayant une taille minimale $ti_{min}$ prédéterminée. A noter que cette taille minimale $ti_{min}$ peut être différente de la taille minimale $t1_{min}$. En réalité, pour des raisons décrites ci-après, préférentiellement, la taille minimale $ti_{min}$ est choisie pour correspondre à la taille minimale $t2_{min}$ des deuxièmes unités de codage uc2.

Une fois cette taille minimale atteinte (si tel est le cas), on procède également en évaluant la ou les métriques D respectivement associées à chacune des partitions de l'ensemble P1 associé à l'unité intermédiaire de taille minimale considérée et en conférant à l'unité de codage intermédiaire la première partition de l'ensemble P1 dont l'unique métrique ou bien une proportion supérieure à la valeur choisie des métriques D associées est inférieure à T.

Toutefois, si aucune de ces partitions ne vérifie cette condition, on attribue à l'unité de codage une partition arbitraire. Par exemple, cette partition arbitraire est la partition de l'unité de codage intermédiaire une seule région de taille identique à celle de l'unité de codage elle-même.

De la sorte, on construit la structure de codage intermédiaire SCIi de la trame entière. A noter que la construction d'une unité de codage intermédiaire uci n'est en rien dépendante de la construction d'une autre unité de codage intermédiaire. Cette construction est ainsi entièrement parallélisable, c'est-à-dire que les différentes unités de codage intermédiaires peuvent être construites en parallèle les unes des autres, par exemple via un ou plusieurs processeurs ou encore via un processeur multi-cœurs.

Pour la construction d'au moins une unité de codage intermédiaire, on ne détermine si la première condition C1 est vérifiée que si une deuxième condition C2 est préalablement vérifiée. Cette deuxième condition C2 porte sur les trames de référence auxquelles se réfèrent les vecteurs de mouvement des premières unités de codage correspondantes. Plus précisément, la deuxième condition C2 est vérifiée lorsque les vecteurs de mouvement des premières unités de codage considérées (c'est-à-dire couvertes par l'unité de codage intermédiaire considérée) pointent vers une même trame de référence $T_{ref}$. L'introduction de cette condition permet d'augmenter la rapidité d'encodage en éliminant le calcul de la ou des métriques pour des cas de figure dans lesquels l'analyse de la dissimilarité des vecteurs de mouvement considérés n'est *a priori* pas ou peu pertinente.

Par exemple, l'analyse de la condition C2 et de sa vérification est réalisée pour chaque partition de l'ensemble P1 préalablement au calcul de la ou des métriques associées à la partition considérée.

Si la condition C2 n'est pas vérifiée, on considère que la condition C1 n'est pas vérifiée pour l'unité de codage considérée, et ce sans calculer la ou les métriques associées. Préférentiellement, la deuxième condition C2 est satifisfaite lors de la construction d'au moins une unité de codage intermédiaire uci.

En outre, dans certains modes de réalisation, lors de la construction de la structure de codage intermédiaire SCIi, on construit pour au moins une première unité de codage uc1 au moins un vecteur de mouvement pondéré en fonction d'un vecteur de mouvement VM de cette unité de codage et de l'intervalle de temps entre la trame de la première unité de codage considérée et la trame de référence $T_{ref}$ pointée par ledit vecteur de mouvement. En effet, de manière connue, la trame de référence associée au vecteur de mouvement est caractérisable par l'intervalle de temps entre la trame de l'unité considérée et la trame de référence $T_{ref}$. Aussi, par exemple, on construit un vecteur de mouvement pondéré en divisant chaque composante du vecteur de mouvement par un facteur déterminé en fonction de cet intervalle de temps. Suite à cela, dans la construction décrite ci-dessus, on détermine la métrique de similarité associée à une ou plusieurs unités de codage couvertes par l'unité de codage intermédiaire considérée à partir d'un ou plusieurs vecteurs de mouvement pondérés ainsi construits.

Ce principe de construction de vecteurs de mouvement pondérés est connu sous le nom anglophone de « scaling », qui peut être traduit par « étalonnage ». En pratique, ce principe permet de construire, au sein d'une unité de codage, des vecteurs de mouvement pointant tous vers une même trame de référence. De fait, dans le procédé de construction d'une unité de codage intermédiaire couvrant des premières unités de codage ainsi étalonnées, la deuxième condition C2 n'est plus pertinente, de sorte qu'on n'en réalise pas l'analyse.

Par ailleurs, dans certains modes de réalisation, la vérification de la première condition C1 ou, lorsqu'elle appliquée, de la deuxième condition C2, n'est analysée que si une troisième condition C3 est vérifiée. Cette troisième condition C3 porte sur le fait que les vecteurs de mouvement des premières unités de codage correspondant à l'unité de codage intermédiaire considérée pointent vers des trames de référence appartenant à la ou les mêmes listes de référence. Ceci permet également de limiter les cas de figure dans lesquels la métrique T est effectivement calculée.

Comme précédemment, cette condition C3 est analysée pour chaque partition de l'ensemble P1 considérée, préalablement au calcul de la ou des métriques associées. Si cette condition C3 n'est pas vérifiée, on considère que la condition C1 n'est pas vérifiée, c'est-à-dire qu'on considère qu'au moins l'une des métriques associées à l'unité de codage considérée n'est pas strictement inférieure à T, et ce sans effectivement calculer cette ou ces métriques.

A noter que dans le cas où la condition C3 est vérifiée et que les premières unités de codage comprennent des vecteurs de mouvement pointant vers des trames appartenant à l'une et l'autre des deux listes de référence, l'unité de codage intermédiaire considérée est associée à une ou plusieurs métriques D pour chacune de ces deux listes. Ainsi, par exemple, chaque partition est associée à un nombre de métriques égal au nombre de régions de l'unité de codage définies par cette partition, et ce pour chaque liste de référence pointée par les données de prédiction associées.

En outre, dans certains modes de réalisation, l'analyse de la première condition C1, de la deuxième condition C2 et/ou de la troisième condition C3, n'est réalisée que si une quatrième condition C4 est vérifiée. Cette quatrième condition C4 est vérifiée lorsque les données de prédiction des premières unités de codage correspondantes comprennent toutes au moins un vecteur de mouvement. En d'autres termes, l'analyse de la condition C1 et, le cas échéant, de la condition C2 et/ou de la condition C3 dans les modes de réalisation correspondants, n'est menée que si les premières unités de codage couvertes par l'unité de codage intermédiaire uci considérée sont toutes prédites par prédiction Inter, et non par prédiction Intra.

Si cette condition C4 n'est pas vérifiée, on considère que la condition C1 n'est pas vérifiée pour l'unité de codage considérée, et ce sans effectivement calculer la ou les métriques associées.

A noter que les modes de réalisation introduisant les conditions C2, C3 et C4 peuvent naturellement être combinés, comme sous-entendu dans la description ci-dessus. Toute combinaison possible de ces modes de réalisation peut être mise en œuvre dans le cadre de l'invention. En outre, l'utilisation de vecteurs de mouvement pondérés peut être réalisée en remplacement de la condition C2 pour une unité de codage donnée, et inversement.

Suite à la construction de chaque unité de codage intermédiaire uci de la structure de codage intermédiaire SCIi, on attribue à chacune des unités de codage intermédiaires uci des données de prédiction construites en fonction des données de prédictions de la ou des premières unités de codage utilisées pour former ladite unité de codage intermédiaire. Par exemple, les données de prédiction sont prises égales aux données de prédiction de l'unique ou de la première des premières unités de codage que couvre l'unité de codage intermédiaire uci considérée. En pratique, on attribue ainsi un vecteur de mouvement à l'unité de codage intermédiaire uci construite comme décrit ci-dessus.

On obtient alors la structure de codage intermédiaire SCIi de la trame considérée, et ce pour chaque trame pour laquelle une telle structure de codage est souhaitée. Préférentiellement, on construit une structure de codage intermédiaire pour chaque trame des données vidéo.

Une fois les structures de codage intermédiaires construites, on ré-encode dans le deuxième format F2 les données vidéos décodées en construisant la deuxième structure de codage SC2i des trames pour lesquelles une structure de codage intermédiaire SCIi a été construite en fonction de la structure de codage intermédiaire SCIi correspondante.

Pour ce faire, on divise la ou chacune de ces trames en deuxièmes unités de codage uc2 de taille maximale choisie t2$_{maxc}$. Cette taille peut être égale ou plus petite que la taille maximale t2max. Par exemple, on prend ces deux tailles égales, ce qui tend à fournir une meilleure rapidité d'encodage.

Ensuite, pour chaque deuxième unité de codage uc2 de taille maximale t2$_{maxc}$, on code ladite deuxième unité de codage de taille maximale choisie selon que l'unité de codage intermédiaire colocalisée comprend ou non des unités de codage intermédiaires de taille strictement inférieure.

Si l'unité de codage intermédiaire uci colocalisée dans la structure de codage intermédiaire ne comprend pas d'unité de codage intermédiaire de taille strictement inférieure, on code ladite deuxième unité de codage selon une partition choisie parmi un deuxième ensemble de partitions P2 prédéterminé en fonction de la partition de l'unité de codage intermédiaire colocalisée en une ou plusieurs régions, ledit ensemble n'incluant pas une subdivision de ladite deuxième unité de codage en deuxièmes unités de codage de taille strictement inférieure, ladite partition étant choisie comme partition fournissant une valeur d'une fonction de coût de codage J choisie minimale parmi les partitions dudit ensemble de partitions.

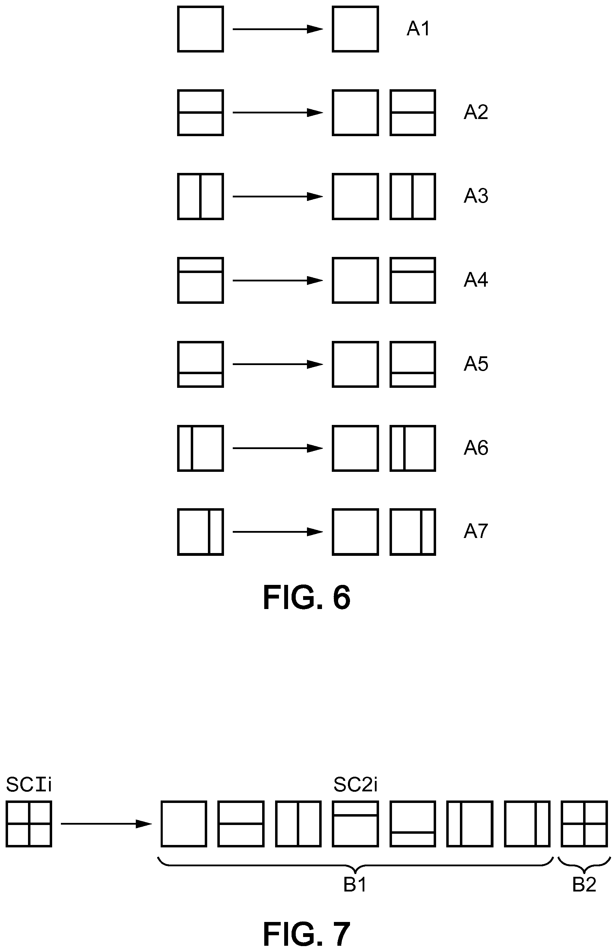

La Figure 6 illustre des exemples d'ensembles de partitions P2. Les ensembles de partitions P2 sont respectivement associés à une partition donnée de l'unité de codage intermédiaire colocalisée lorsque cette unité intermédiaire colocalisée présente ou non une partition en régions mais n'est pas divisée en unités de codage de tailles plus petites. L'ensemble P2 illustré par le sous-groupe A1 correspond à un cas de figure dans lequel l'unité de codage intermédiaire n'est pas partitionnée en régions plus petites, les sous-groupes A2 à A7 correspondant à des ensembles de partition P2 pour des deuxièmes unités de codage dont l'unité de codage intermédiaire colocalisée est partitionnée en régions plus petites (mais, comme indiqué précédemment, cette unité n'est pas divisée en unités de codage de taille plus petite).

En outre, par exemple, la fonction de coût de codage J s'exprime sous la forme :

$$J = D + \lambda R$$

où D est un paramètre de distorsion, R est un paramètre de débit et λ est un coefficient de pondération.

On retient alors pour l'unité de codage la partition parmi toutes celles de l'ensemble P2 associé qui fournit la valeur de la fonction J la plus petite parmi toutes les partitions.

A l'inverse, si l'unité de codage intermédiaire colocalisée comprend des unités de codage intermédiaires uci de taille strictement inférieure, on considère un troisième ensemble de partitions P3 prédéterminé et au moins une subdivision de ladite deuxième unité de codage en deuxièmes unités de codage (uc2) de taille strictement inférieure.

La Figure 7 illustre un exemple d'ensemble de partitions P3 (sous-groupe B1), ainsi qu'un exemple de subdivision en unités de codage de taille plus petite (sous-groupe B2). Par exemple, cette subdivision est identique à la subdivision de l'unité de codage intermédiaire colocalisée en unités de codage intermédiaires plus petites.

Préférentiellement, le troisième ensemble de partitions comprend l'ensemble des partitions possibles d'une unité de codage qui sont prévues par le format F2.

En outre, préférentiellement, le deuxième ensemble de partitions P2 est un sous ensemble strict du troisième ensemble de partitions P3. Ainsi, par exemple, le deuxième ensemble P2 comprend une partition en l'unité de codage elle-même, et une partition identique à la partition de l'unité de codage intermédiaire colocalisée. Ceci permet de réduire la complexité du procédé de transcodage selon l'invention en limitant le nombre de partitions pour lesquelles la fonction de coût de codage J est calculée.

On détermine alors, parmi ledit troisième ensemble de partitions P3 et ladite au moins une subdivision, la structure de codage qui fournit une valeur minimale de ladite fonction de coût de codage (J). Cette structure de codage est donc soit une partition de l'ensemble P3, soit la ou l'une des subdivisions envisagées.

En fonction du résultat, la suite de la construction de la deuxième unité de codage diverge.

En effet, si ladite structure de codage qui minimise la fonction de coût de codage J est une partition du troisième ensemble de partitions P3, on code l'unité de codage intermédiaire en lui conférant la structure de codage, c'est-à-dire la partition en question.

Toutefois, si ladite structure de codage est la ou l'une de ladite au moins une subdivision en deuxièmes unités de codage de tailles strictement inférieures, on confère à la deuxième unité de codage la subdivision correspondante puis on procède de manière itérative en considérant chacune des deuxièmes unités de codage de cette subdivision comme unité de codage à laquelle les étapes ci-dessus sont appliquées, et ce jusqu'à éventuellement aboutir à des deuxièmes unités de codage dont la taille correspond à la taille minimale des unités de codage intermédiaires colocalisées.

Ainsi, pour chacune des unités de codage de la subdivision, on détermine à nouveau si l'unité de codage intermédiaire colocalisée comprend ou non des unités de codage de taille strictement inférieure. Si tel n'est pas le cas, on détermine la structure de codage de l'unité considérée à partir de l'ensemble de partitions P2 associé et lui-même déterminé en fonction de l'éventuelle partition de l'unité de codage intermédiaire colocalisée. Si elle comprend de nouveau des unités de codage de taille plus petite (et pas simplement des régions de partitions, comme indiqué précédemment), on détermine si la structure de codage de l'unité de codage qui minimise la fonction de coût de codage est une partition, auquel cas on lui confère cette partition comme structure de codage, ou bien une subdivision en unités de codage de tailles encore plus petites, auquel on confère à cette unité de codage cette subdivision et on répète à nouveau les étapes précédentes pour les unités de codage de la subdivision nouvellement formée.

Le procédé selon l'invention présente l'avantage majeur de limiter considérablement les structures de codage qui sont testées, c'est-à-dire dont on évalue la pertinence, pour déterminer la deuxième structure de codage d'une deuxième unité de codage. En effet, lors de la mise en œuvre du procédé, le test des différentes partitions d'une deuxième unité de codage donnée s'effectue par itération à taille d'unité de codage donnée et, pour chaque itération, sur une faible population de partitions possibles de cette unité de codage. En d'autres termes, les tests sont effectués en incrémentant progressivement le niveau de granularité considéré, chaque niveau de granularité donnant lieu à un petit nombre de tests. En outre, le nombre d'itérations lui-même est limité du fait qu'il est adossé à la subdivision ou non de l'unité de codage colocalisée en unités de codage de taille plus petite. La complexité du transcodage selon l'invention en est donc d'autant diminuée, en particulier comparativement au principe FD-FE, lors de la mise en œuvre duquel les tests portent sur l'ensemble des combinaisons de partitions possibles d'une unité de codage et de ses subdivisions.

A noter que dans la description ci-dessus, on a utilisé l'expression « structure de codage » pour une trame mais aussi pour des unités de codage. Dans ce dernier cas d'utilisation, l'expression « structure de codage » est à comprendre comme « structure locale de codage », c'est-à-dire en pratique le découpage des unités en unités de codage plus petites et/ou en régions de partition.

Cette étape de ré-encodage fournit ainsi le flux binaire dans le deuxième format F2. Ce flux binaire est envoyée à un autre équipement via la deuxième interface I2, ou bien est stocké sur l'équipement 2.

A noter par ailleurs que le module de transcodage 4 est par exemple un module logiciel. Aussi, l'invention concerne un programme informatique comportant des instructions pour la mise en œuvre du procédé ci-dessus lorsque ce programme est exécuté par un processeur.

Alternativement, le module de transcodage 4 est un module matériel. Par exemple, dans les modes de réalisation correspondants, le module de transcodage 4 se présente sous la forme d'un circuit intégré de type « chipset », qui signifie ensemble de puces.

Les inventeurs ont mis en œuvre le procédé selon l'invention notamment pour un transcodage AVC-HEVC de dix-neuf séquences vidéo de référence (comprenant de 150 à 600 trames chacune) et ont comparé les résultats obtenus avec la méthode FD-FE et divers procédés de l'art antérieur.

Le temps de transcodage a été réduit de 58% en moyenne par rapport à la méthode FD-FE pour une augmentation de débit (à qualité constante) moyenne de 2.4%. Les résultats sont meilleurs que ceux des procédés de l'art antérieur dans une configuration dite « Random Access » (accès aléatoire), et sont comparables dans une configuration dite « Low-Delay » (c'est-à-dire en temps réel).

Le procédé de transcodage selon l'invention est applicable à tous les formats qui prévoient une structuration des trames en unités de codage, ces unités de codage étant associées des données de prédiction renvoyant à un type de codage Inter ou équivalent, c'est-à-dire reposant sur la prédiction du contenu d'une trame à partir du contenu d'une ou plusieurs autres trames.

Toutefois, l'invention est particulièrement adaptée au transcodage entre un premier format F1 et un deuxième format F2 pour lesquels la taille maximale $t2_{max}$ est supérieure à la taille $t1_{max}$. En outre, l'invention est particulièrement adaptée aux formats qui prévoient des partitions des unités de codage en régions. En effet, pour ces formats-ci, la réduction de complexité offerte par l'invention est d'autant plus tangible qu'elle limite le nombre de structures de codage testées pour la construction des unités de codage du format cible (c'est-à-dire le format F2).

En outre, dans le contexte du procédé de transcodage selon l'invention, préférentiellement, la taille minimale $ti_{min}$ est supérieure ou égale à la taille minimale

t1$_{min}$. En effet, les premières unités de codage uc1 sont fusionnées pour former les unités de codage intermédiaires, l'algorithme de fusion aboutissant à la fusion de la première unité de codage avec elle-même lorsque la taille des unités de codage intermédiaire correspond, dans le cas le plus défavorable, à la taille minimale des premières unités de codage. En effet, dans ce cas, la ou les métriques associées sont calculées à partir d'un unique vecteur de mouvement, et sont donc nulles. L'algorithme ne peut donc pas aboutir à une unité de codage intermédiaire de taille plus petite que la taille minimale des premières unités de codage.

Dans les cas où ti$_{min}$ est strictement supérieur à t1$_{min}$, et comme décrit ci-dessus, il peut se produire qu'aucune partition testée ne convienne, auquel cas on confère à l'unité de codage intermédiaire de taille minimale considérée une partition arbitraire, telle que par exemple une partition en l'unité elle-même.

Par ailleurs, préférentiellement, la taille maximale ti$_{max}$ est supérieure ou égale à la taille maximale t1$_{max}$. En effet, l'un des moyens par lesquels l'invention réduit la complexité du transcodage entre les deux formats est la diminution de la complexité de la structure locale de codage, c'est-à-dire la construction de structures de codage locales possiblement moins subdivisées. Ne pas observer cette relation rendrait donc impossible cette réduction des subdivisions, et réduirait donc le bénéfice de l'invention.

Par ailleurs, préférentiellement, la taille maximale t2$_{max}$ est supérieure ou égale à la taille maximale ti$_{max}$. En effet, du fait du principe de limitation de la complexité de la structure locale des deuxièmes unités de codage appliqué lors de leur construction via le procédé selon l'invention, une deuxième unité de codage présente une structure de codage locale au plus autant partitionnée et/ou subdivisée que l'unité de codage intermédiaire colocalisée. Or, il est souhaitable de pouvoir disposer de deuxièmes unités de codage présentant une structure de codage moins complexe que celle de l'unité de codage intermédiaire colocalisée, et donc de taille supérieure. Dans un tel cas de figure, en pratique, on considère que les unités de codage intermédiaires colocalisées à ces deuxièmes unités de codage sont subdivisées (cas du schéma de la figure 7)

En outre, préférentiellement, la taille t2$_{min}$ est supérieure ou égale à la taille ti$_{min}$. En effet, l'algorithme de construction des deuxièmes unités de codage ne peut pas aboutir à une deuxième unité de codage de taille inférieure à ti$_{min}$ car les unités de codage intermédiaires de taille minimale ne sont par définition pas subdivisées. La deuxième unité de codage colocalisée à une unité de codage intermédiaire de taille minimale ne peut donc elle-même être subdivisée.

## Revendications

**1.** Procédé de transcodage d'un flux binaire (FB1) contenant des données vidéo dans un premier format (F1) en un flux binaire (FB2) contenant lesdites données vidéo dans un deuxième format (F2), les données vidéo comprenant des trames (T1i, T2i) lesdites trames étant, dans le premier format, divisées en premières unités de codage (ucl) couvrant chacune une région de la trame et définissant pour chaque trame une première structure de codage (SC1i), et étant, dans le deuxième format (F2), divisées en deuxièmes unités de codage (uc2) définissant pour chaque trame une deuxième structure de codage (SC2i), le procédé comprenant :

- une étape de décodage du flux binaire fournissant des données vidéo décodées, des données représentatives de la première structure de codage (SC1i) des trames et, pour tout ou partie des premières unités de codage (ucl), des données de prédiction, les données de prédiction d'au moins une première unité de codage (ucl) comprenant un vecteur de mouvement (VM), et
- une étape de ré-encodage au cours de laquelle les données vidéo décodées sont encodées dans le deuxième format (F2),

**caractérisé en ce que** lors de l'étape de ré-encodage, pour au moins une trame des données vidéos décodées:

- on construit une structure de codage intermédiaire (SCIi) comprenant des unités de codage intermédiaires (uci) construites chacune pour correspondre à la fusion d'une ou plusieurs premières unités de codage (ucl) couvertes par ladite unité de codage intermédiaire lorsqu'une première condition (C1) est vérifiée, première condition selon laquelle au moins une métrique de dissimilarité (M) associée à l'unité de codage intermédiaire considérée et déterminée à partir des vecteurs de mouvement desdites premières unités de codage est inférieure à un seuil (T) prédéterminé, au moins une unité de codage intermédiaire (uci) correspondant à la fusion d'au moins deux premières unités de codage (ucl), la métrique de dissimilarité (M) entre les vecteurs de mouvement de premières unités de codage s'exprimant sous la forme $\sqrt{\sigma_x^2 + \sigma_y^2}$ et étant déterminée comme inférieure audit seuil prédéterminé lorsque la relation $\sqrt{\sigma_x^2 + \sigma_y^2} \leq T$ est vérifiée, où $\sigma_x$ et $\sigma_y$ sont des écarts-types estimés sur l'ensemble des composantes des vecteurs de mouvement des premières unités de codage (ucl) respectivement dans une direction horizontale et dans une direction verticale de la trame comprenant lesdites unités de codage, et T est ledit seuil prédéterminé,

- les vecteurs de mouvement (VM) de tout ou partie des premières unités de codage pointant chacun vers une trame de référence ($T_{ref}$), on détermine si la première condition (C1) est vérifiée uniquement si une deuxième condition (C2) est vérifiée, deuxième condition selon laquelle les vecteurs de mouvement (VM) des premières unités de codage considérées pointent vers une même trame de référence.

- on attribue à chacune des unités de codage intermédiaires (uci) des données de prédiction construites en fonction des données de prédictions de la ou des premières unités de codage fusionnées pour former ladite unité de codage intermédiaire, et

- on ré-encode dans le deuxième format (F2) les données vidéos décodées en construisant la deuxième structure de codage (uc2) en fonction de la structure de codage intermédiaire (SCIi).

2. Procédé selon la revendication 1, **caractérisé en ce que** pour la construction de la structure de codage intermédiaire :

   - on divise la ou lesdites trames en unités de codage intermédiaires (uci) de taille maximale choisie ($ti_{max}$), chaque unité de codage intermédiaire de taille maximale couvrant un ensemble de premières unités de codage au sein de la première structure de codage,
   - a) pour chaque unité de codage intermédiaire de taille maximale, et à partir des données de prédiction des premières unités de codage (ucl) couvertes par ladite unité de codage intermédiaire (uci) de taille maximale ($ti_{max}$), on évalue selon un ordre prédéterminé la ou les métriques de dissimilarité (M) respectivement associées à chacun des éléments d'un premier ensemble de partitions (P) prédéterminées de ladite unité de codage intermédiaire de taille maximale,
   - b) pour chaque unité de codage intermédiaire (uci), on forme ladite unité de codage intermédiaire (uci) en conférant à ladite unité de codage intermédiaire la première partition parmi ledit premier ensemble de partitions (P) prédéterminées pour laquelle l'unique métrique de dissimilarité ou bien une proportion supérieure à une valeur non nulle choisie des métriques de dissimilarité associées est inférieure au seuil prédéterminé si ladite première partition existe,
   - c) si ladite première partition n'existe pas pour ladite unité de codage de taille maximale, on subdivise ladite unité de codage intermédiaire en n unités de codage intermédiaires (uci) de taille strictement inférieure à ladite taille maximale choisie ($ti_{max}$), et

   - d) on répète les étapes a), b) et c) pour chaque unité de codage intermédiaire nouvellement formée et ce jusqu'à obtenir des unités de codage intermédiaires ayant une taille minimale ($ti_{min}$) prédéterminée.

3. Procédé selon la revendication 2, **caractérisé en ce que** ledit ensemble de partitions prédéterminées comprend au moins une partition en m régions de tailles strictement inférieures à la taille de l'unité de codage intermédiaire considérée, une métrique de dissimilarité (M) étant associée à chacune desdites m régions.

4. Procédé selon l'une quelconque des revendications 1 à 3, **caractérisé en ce que** les vecteurs de mouvement (VM) de toute ou partie des premières unités de codage (ucl) pointent chacun vers une trame de référence ($T_{ref}$), **en ce qu'**on construit pour au moins une desdites premières unités de codage au moins un vecteur de mouvement pondéré en fonction d'un vecteur de mouvement (VM) de ladite première unité de codage et de l'intervalle de temps entre la trame de la première unité de codage considérée et la trame de référence pointée par ledit vecteur de mouvement, et **en ce qu'**on détermine la métrique de similarité associée à une ou plusieurs unités de codage couvertes par l'unité de codage intermédiaire considérée à partir d'un ou plusieurs vecteurs de mouvement pondérés.

5. Procédé selon l'une quelconque des revendications précédentes, **caractérisé en ce qu'**aux trames des données vidéos sont associées deux listes de référence de trames à l'une et/ou à l'autre desquelles les vecteurs de mouvement des unités de codage renvoient, et **en ce que** la vérification de la première condition (C1) ou, lorsqu'elle appliquée, de la deuxième condition (C2), n'est analysée que si une troisième condition (C3) est vérifiée, troisième condition selon laquelle les vecteurs de mouvement (VM) des premières unités de codage correspondantes pointent vers des trames de référence appartenant à la ou les mêmes listes de référence.

6. Procédé selon la revendication 5, **caractérisé en ce que** l'analyse de la première condition (C1), de la deuxième condition (C2) et/ou de la troisième condition (C3), n'est réalisée que si une quatrième condition (C4) est vérifiée, quatrième condition selon laquelle les données de prédiction des premières unités de codage (ucl) correspondantes comprennent toutes au moins un vecteur de mouvement (VM).

7. Procédé selon l'une quelconque des revendications précédentes, **caractérisé en ce que** lors de l'étape de ré-encodage, on divise la ou chaque trame en deuxièmes unités de codage (uc2) de taille maximale (t2$_{maxc}$) choisie, et, pour chaque deuxième unité de codage (uc2) de taille maximale, on code ladite deuxième unité de codage de taille maximale choisie selon les cas de figure suivants :

- e) si l'unité de codage intermédiaire colocalisée, c'est-à-dire couvrant la même région de la trame, dans la structure intermédiaire de codage (SCIi) ne comprend pas d'unité de codage intermédiaire (uci) de taille strictement inférieure, on code ladite deuxième unité de codage (uc2) selon une partition choisie parmi un deuxième ensemble de partitions (P2) prédéterminé en fonction de la partition de l'unité de codage intermédiaire colocalisée, ledit deuxième ensemble (P2) n'incluant pas une subdivision de ladite deuxième unité de codage en deuxièmes unités de codage de taille strictement inférieure, ladite partition choisie minimisant une fonction de coût de codage (J) choisie,
- f) si l'unité de codage intermédiaire colocalisée comprend des unités de codage intermédiaires de taille strictement inférieure, on considère un troisième ensemble de partitions (P3) prédéterminé et au moins une subdivision de ladite deuxième unité de codage en deuxièmes unités de codage de tailles strictement inférieures, on détermine la structure de codage parmi ledit troisième ensemble de partitions (P3) et ladite au moins une subdivision qui fournit une valeur minimale de ladite fonction de coût de codage (J), et :

- si ladite structure de codage est une partition du troisième ensemble de partitions (P3), on code l'unité de codage intermédiaire selon ladite structure de codage,
- si ladite structure de codage est la ou l'une de ladite au moins une subdivision en deuxièmes unités de codage de tailles strictement inférieures, on subdivise la deuxième unité de codage selon ladite subdivision et on applique les étapes e) et f) à chacune des deuxièmes unités de codage de ladite subdivision nouvellement formée, et ce jusqu'à considérer des deuxièmes unités de codage présentant une taille minimale prédéterminée des unités de codage intermédiaires colocalisées.

**8.** Procédé selon l'une quelconque des revendications précédentes, **caractérisé en ce que** le deuxième format est le format HEVC, et **en ce que** le premier format est le format MPEG-2 ou AVC.

**9.** Programme informatique **caractérisé en ce qu'**il comporte des instructions pour la mise en œuvre du procédé selon l'une des revendications 1 à 8, lorsque ce programme est exécuté par un processeur.

**10.** Module de transcodage adapté pour transcoder un flux binaire (FB1) contenant des données vidéo dans un premier format (F1) en un flux binaire (FB2) contenant lesdites données vidéo dans un deuxième format (F2), les données vidéo comprenant des trames (Tli, T2i) lesdites trames étant, dans le premier format, divisées en premières unités de codage (ucl) couvrant chacune une région de la trame et définissant pour chaque trame une première structure de codage (SC1i), et étant, dans le deuxième format (F2), divisées en deuxièmes unités de codage (uc2) définissant pour chaque trame une deuxième structure de codage (SC2i), le module de transcodage comprenant :

- un module de décodage (6) adapté pour décoder le flux binaire, fournissant des données vidéo décodées, des données représentatives des premières structures de codage et, pour tout ou partie des premières unités de codage, des données de prédiction, les données de prédiction d'au moins une unité de codage comprenant un vecteur de mouvement, et
- un module de ré-encodage (8) adapté pour encoder les données vidéo décodées dans le deuxième format (F2),

**caractérisé en ce que** le module de ré-encodage (8) est configuré pour :

- pour au moins une trame des données vidéos décodées dans le premier format (F1), construire une structure de codage intermédiaire (SCIi) comprenant des unités de codage intermédiaires (uci) chacune construite pour correspondre à la fusion d'une ou plusieurs premières unités de codage (ucl) couvertes par ladite unité de codage intermédiaire (uci) en réponse à la vérification d'une première condition (C1) selon laquelle au moins une métrique de dissimilarité (M) associée à l'unité de codage intermédiaire considérée et déterminée à partir des vecteurs de mouvement desdites premières unités de codage est inférieure à un seuil (T) prédéterminé, au moins une unité de codage intermédiaire (uci) correspondant à la fusion d'au moins deux premières unités de codage (ucl), la métrique de dissimilarité (M) entre les vecteurs de mouvement de premières unités de codage s'exprimant sous la forme $\sqrt{(\sigma x^2 + \sigma y^2)}$ et étant déterminée comme inférieure audit seuil prédéterminé lorsque la relation $V(\sigma x^2 + \sigma y^2) \leq T$ est vérifiée, où $\sigma x$ et $\sigma y$ sont des écarts-types estimés sur l'ensemble des composantes des vecteurs de mouvement des premières unités de codage (ucl) respectivement dans une direction horizontale et dans une direction verticale de la trame comprenant lesdites unités de codage, et T est ledit seuil prédéterminé,
- les vecteurs de mouvement (VM) de tout ou partie des premières unités de codage pointant chacun vers une trame de référence (T$_{ref}$), déterminer si la première condition (C1) est vérifiée uniquement si une deuxième condition (C2) est vérifiée, deuxième condition selon laquelle les vecteurs de mouvement (VM) des premières unités de codage considérées pointent vers une même trame de référence,
- attribuer à chacune des unités de codage intermédiaires (uci) des données de prédiction construites en fonction des données de prédictions de la ou des premières unités de codage fusionnée(s) pour former ladite unité de codage intermédiaire, et
- ré-encoder dans le deuxième format (F2) les données vidéo décodées en construisant la deuxième structure de codage (SC2i) en fonction de la structure de codage intermédiaire (SCIi).

11. Equipement de télécommunication (2) comportant une interface (I1) pour recevoir un flux binaire contenant des données vidéo dans un premier format, **caractérisé en ce qu'**il comprend un module de transcodage (4) selon la revendication 10.


**Patentansprüche**

1. Verfahren zur Transcodierung eines Videodaten in einem ersten Format (F1) enthaltenden Bitstroms (FB1) in einen die Videodaten in einem zweiten Format (F2) enthaltenden Bitstrom (FB2), wobei die Videodaten Frames (T1i, T2i) enthalten, wobei die Frames im ersten Format in erste Codierungseinheiten (uc1) geteilt sind, die je einen Bereich des Frames abdecken und für jeden Frame eine erste Codierungsstruktur (SC1i) definieren, und im zweiten Format (F2) in zweite Codierungseinheiten (uc2) geteilt sind, die für jeden Frame eine zweite Codierungsstruktur (SC2i) definieren, wobei das Verfahren enthält:

- einen Schritt der Decodierung des Bitstroms, der decodierte Videodaten, für die erste Codierungsstruktur (SC1i) der Frames repräsentative Daten und für jede oder einen Teil der ersten Codierungseinheiten (uc1) Prädiktionsdaten liefert, wobei die Prädiktionsdaten mindestens einer ersten Codierungseinheit (uc1) einen Bewegungsvektor (VM) enthalten, und
- einen Schritt der Neucodierung, während dessen die decodierten Videodaten im zweiten Format (F2) codiert werden,

**dadurch gekennzeichnet, dass** im Neucodierungsschritt für mindestens einen Frame der decodierten Videodaten:

- eine Zwischencodierungsstruktur (SC1i) konstruiert wird, die Zwischencodierungseinheiten (uci) enthält, die je konstruiert werden, um der Zusammenführung einer oder mehrerer erster Codierungseinheiten (uc1) zu entsprechen, die von der Zwischencodierungseinheit abgedeckt werden, wenn eine erste Bedingung (C1) erfüllt ist, erste Bedingung, gemäß der mindestens eine der betrachteten Zwischencodierungseinheit zugeordnete und ausgehend von den Bewegungsvektoren der ersten Codierungseinheiten bestimmte Unähnlichkeitsmetrik (M) niedriger ist als eine vorbestimmte Schwelle (T), wobei mindestens eine Zwischencodierungseinheit (uci) der Zusammenführung von mindestens zwei ersten Codierungseinheiten (uc1) entspricht, wobei die Unähnlichkeitsmetrik (M) zwischen den Bewegungsvektoren erster Codierungseinheiten in der Form $\sqrt{\sigma_x^2 + \sigma_y^2}$ ausgedrückt und als niedriger als die vorbestimmte Schwelle bestimmt wird, wenn die Beziehung

$$\sqrt{\sigma_x^2 + \sigma_y^2} \leq T$$

erfüllt ist, wobei $\sigma_x$ und $\sigma_y$ geschätzte Standardabweichungen über die Gesamtheit der Komponenten der Bewegungsvektoren der ersten Codierungseinheiten (uc1) in einer waagrechten Richtung bzw. einer senkrechten Richtung des die Codierungseinheiten enthaltenden Frames sind, und T die vorbestimmte Schwelle ist,
- da die Bewegungsvektoren (VM) jeder oder eines Teils der ersten Codierungseinheiten je auf einen Bezugsframe (T$_{ref}$) zeigen, nur dann bestimmt wird, ob die erste Bedingung (C1) erfüllt ist, wenn eine zweite Bedingung (C2) erfüllt ist, zweite Bedingung, gemäß der die Bewegungsvektoren (VM) der betrachteten ersten Codierungseinheiten auf einen gleichen Bezugsframe zeigen,
- jeder der Zwischencodierungseinheiten (uci) Prädiktionsdaten zugeteilt werden, die abhängig von den Prädiktionsdaten der ersten Codierungseinheit(en) konstruiert werden, die zusammengeführt werden, um die Zwischencodierungseinheit zu bilden, und
- die decodierten Videodaten im zweiten Format (F2) neu codiert werden, indem die zweite Codierungsstruktur (uc2) abhängig von der Zwischencodierungsstruktur (SCIi) konstruiert wird.

2. Verfahren nach Anspruch 1, **dadurch gekennzeichnet, dass** für die Konstruktion der Zwischencodierungsstruktur:

- der oder die Frames in Zwischencodierungseinheiten (uci) gewählter maximaler Größe ($ti_{max}$) geteilt werden, wobei jede Zwischencodierungseinheit maximaler Größe eine Einheit erster Codierungseinheiten innerhalb der ersten Codierungsstruktur abdeckt,

- a) für jede Zwischencodierungseinheit maximaler Größe, und ausgehend von den Prädiktionsdaten der ersten Codierungseinheiten (ucl), die von der Zwischencodierungseinheit (uci) maximaler Größe ($ti_{max}$) abgedeckt werden, gemäß einer vorbestimmten Ordnung die Unähnlichkeitsmetrik(en) (M) ermittelt wird oder werden, die jedem der Elemente einer ersten Einheit vorbestimmter Partitionen (P) der Zwischencodierungseinheit maximaler Größe zugeordnet sind,

- b) für jede Zwischencodierungseinheit (uci) die Zwischencodierungseinheit (uci) gebildet wird, indem an die Zwischencodierungseinheit die erste Partition unter der Einheit von vorbestimmten Partitionen (P) übertragen wird, für die die einzige Unähnlichkeitsmetrik oder auch ein Anteil größer als ein gewählter Wert ungleich Null der zugeordneten Unähnlichkeitsmetriken niedriger als die vorbestimmte Schwelle ist, wenn die erste Partition existiert,

- c) wenn die erste Partition für die Codierungseinheit maximaler Größe nicht existiert, die Zwischencodierungseinheit in n Zwischencodierungseinheiten (uci) einer Größe strikt geringer als die gewählte maximale Größe ($ti_{max}$) unterteilt wird, und

- d) die Schritte a), b) und c) für jede neu gebildete Zwischencodierungseinheit wiederholt werden, und dies, bis Zwischencodierungseinheiten erhalten werden, die eine vorbestimmte minimale Größe ($ti_{min}$) haben.

3. Verfahren nach Anspruch 2, **dadurch gekennzeichnet, dass** die Einheit von vorbestimmten Partitionen mindestens eine Partition in m Bereiche von Größen strikt kleiner als die Größe der betrachteten Zwischencodierungseinheit enthält, wobei jedem der m Bereiche eine Unähnlichkeitsmetrik (M) zugeordnet ist.

4. Verfahren nach einem der Ansprüche 1 bis 3, **dadurch gekennzeichnet, dass** die Bewegungsvektoren (VM) jeder oder eines Teils der ersten Codierungseinheiten (ucl) je auf einen Bezugsframe ($T_{ref}$) zeigen, dass für mindestens eine der ersten Codierungseinheiten mindestens ein Bewegungsvektor konstruiert wird, der abhängig von einem Bewegungsvektor (VM) der ersten Codierungseinheit und dem Zeitintervall zwischen dem Frame der betrachteten ersten Codierungseinheit und dem Frame gewichtet wird, auf den der Bewegungsvektor zeigt, und dass die einer oder mehreren von der betrachteten Zwischencodierungseinheit abgedeckten Codierungseinheiten zugeordnete Ähnlichkeitsmetrik ausgehend von einem oder mehreren gewichteten Bewegungsvektoren bestimmt wird.

5. Verfahren nach einem der vorhergehenden Ansprüche, **dadurch gekennzeichnet, dass** den Frames der Videodaten zwei Bezugslisten von Frames zugeordnet sind, auf die eine und/oder die andere von denen die Bewegungsvektoren der Codierungseinheiten verweisen, und dass die Erfüllung der ersten Bedingung (C1) oder, wenn sie angewendet wird, der zweiten Bedingung (C2), nur analysiert wird, wenn eine dritte Bedingung (C3) erfüllt ist, dritte Bedingung, gemäß der die Bewegungsvektoren (VM) der entsprechenden ersten Codierungseinheiten auf Bezugsframes zeigen, die zu der oder den gleichen Bezugsliste(n) gehören.

6. Verfahren nach Anspruch 5, **dadurch gekennzeichnet, dass** die Analyse der ersten Bedingung (C1), der zweiten Bedingung (C2) und/oder der dritten Bedingung (C3) nur durchgeführt wird, wenn eine vierte Bedingung (C4) erfüllt ist, vierte Bedingung, gemäß der die Prädiktionsdaten der entsprechenden ersten Codierungseinheiten (ucl) alle mindestens einen Bewegungsvektor (VM) enthalten.

7. Verfahren nach einem der vorhergehenden Ansprüche, **dadurch gekennzeichnet, dass** im Schritt der Neucodierung der oder jeder Frame in zweite Codierungseinheiten (uc2) gewählter maximaler Größe ($t2_{max}$) geteilt wird, und für jede zweite Codierungseinheit (uc2) maximaler Größe die zweite Codierungseinheit gewählter maximaler Größe gemäß den folgenden Fallbeispielen codiert wird:

- e) wenn die kolokalisierte Zwischencodierungseinheit, d.h., die den gleichen Bereich des Frames abdeckt, in der Zwischencodierungsstruktur (SCli) keine Zwischencodierungseinheit (uci) strikt geringerer Größe enthält, die zweite Codierungseinheit (uc2) gemäß einer Partition codiert wird, die aus einer vorbestimmten zweiten Einheit von Partitionen (P2) abhängig von der Partition der kolokalisierten Zwischencodierungseinheit gewählt wird, wobei die zweite Einheit (P2) keine Unterteilung der zweiten Codierungseinheit in zweite Codierungseinheiten strikt geringerer Größe umfasst, wobei die gewählte Partition eine gewählte Codierkostenfunktion (J) minimiert,

- f) wenn die kolokalisierte Zwischencodierungseinheit Zwischencodierungseinheiten strikt geringerer Größe enthält, werden eine dritte vorbestimmte Einheit von Partitionen (P3) und mindestens eine Unterteilung der zweiten Codierungseinheit in zweite Codierungseinheiten von strikt geringeren Größen betrachtet, wird die Codierungsstruktur aus der dritten Einheit von Partitionen (P3) und der mindestens einen Unterteilung bestimmt, die einen minimalen Wert der Codierkostenfunktion (J) liefert, und:

- wenn die Codierungsstruktur eine Partition der dritten Einheit von Partitionen (P3) ist, wird die Zwischencodierungseinheit gemäß der Codierungsstruktur codiert,
- wenn die Codierungsstruktur die oder eine der mindestens einen Unterteilung in zweite Codierungseinheiten strikt geringerer Größen ist, wird die zweite Codierungseinheit gemäß der Unterteilung unterteilt, und die Schritte e) und f) werden an jede der zweiten Codierungseinheiten der neu gebildeten Unterteilung angewendet, und dies, bis zweite Codierungseinheiten betrachtet werden, die eine vorbestimmte minimale Größe der kolokalisierten Zwischencodierungseinheiten aufweisen.

8. Verfahren nach einem der vorhergehenden Ansprüche, **dadurch gekennzeichnet, dass** das zweite Format das Format HEVC ist, und dass das erste Format das Format MPEG-2 oder AVC ist.

9. EDV-Programm, **dadurch gekennzeichnet, dass** es Anweisungen zur Durchführung des Verfahrens nach einem der Ansprüche 1 bis 8 aufweist, wenn dieses Programm von einem Prozessor ausgeführt wird.

10. Transcodierungsmodul, das geeignet ist, einen Videodaten in einem ersten Format (F1) enthaltenden Bitstrom (FB1) in einen die Videodaten in einem zweiten Format (F2) enthaltenden Bitstrom (FB2) zu transcodieren, wobei die Videodaten Frames (T1i, T2i) enthalten, wobei die Frames in dem ersten Format in erste Codierungseinheiten (uc1) geteilt sind, die je einen Bereich des Frames abdecken und für jeden Frame eine erste Codierungsstruktur (SC1i) definieren, und im zweiten Format (F2) in zweite Codierungseinheiten (uc2) geteilt sind, die für jeden Frame eine zweite Codierungsstruktur (SC2i) definieren, wobei das Transcodierungsmodul enthält:

- ein Decodierungsmodul (6), das geeignet ist, den Bitstrom zu decodieren, das decodierte Videodaten, für die ersten Codierungsstrukturen repräsentative Daten und für jede oder einen Teil der ersten Codierungseinheiten Prädiktionsdaten liefert, wobei die Prädiktionsdaten mindestens einer Codierungseinheit einen Bewegungsvektor enthalten, und
- ein Neucodierungsmodul (8), das geeignet ist, die decodierten Videodaten im zweiten Format (F2) zu codieren,

**dadurch gekennzeichnet, dass** das Neucodierungsmodul (8) konfiguriert ist:

- für mindestens einen Frame der decodierten Videodaten im ersten Format (F1) eine Zwischencodierungsstruktur (SC1i) zu konstruieren, die Zwischencodierungseinheiten (uci) enthält, die je konstruiert sind, um der Zusammenführung einer oder mehrerer erster Codierungseinheiten (ucl) zu entsprechen, die von der ersten Zwischencodierungseinheit (uci) abgedeckt werden, als Antwort auf die Erfüllung einer ersten Bedingung (C1), gemäß der mindestens eine der betrachteten Zwischencodierungseinheit zugeordnete und ausgehend von den Bewegungsvektoren der ersten Codierungseinheiten bestimmte Unähnlichkeitsmetrik (M) niedriger als eine vorbestimmte Schwelle (T) ist, wobei mindestens eine Zwischencodierungseinheit (uci) der Zusammenführung von mindestens zwei ersten Codierungseinheiten (ucl) entspricht, wobei die Unähnlichkeitsmetrik (M) zwischen den Bewegungsvektoren erster Codierungseinheiten in der Form $\sqrt{\sigma_x^2 + \sigma_y^2}$ ausgedrückt und als niedriger als die vorbestimmte Schwelle bestimmt wird, wenn die Beziehung $\sqrt{\sigma_x^2 + \sigma_y^2} \leq T$ erfüllt ist, wobei $\sigma_x$ und $\sigma_y$ geschätzte Standardabweichungen über die Gesamtheit der Komponenten der Bewegungsvektoren der ersten Codierungseinheiten (ucl) in einer waagrechten Richtung bzw. einer senkrechten Richtung des die Codierungseinheiten enthaltenden Frames sind, und T die vorbestimmte Schwelle ist,
- da die Bewegungsvektoren (VM) jeder oder eines Teils der ersten Codierungseinheiten je auf einen Bezugsframe ($T_{ref}$) zeigen, nur zu bestimmen, ob die erste Bedingung (CI) erfüllt ist, wenn eine zweite Bedingung (C2) erfüllt ist, zweite Bedingung, gemäß der die Bewegungsvektoren (VM) der betrachteten ersten Codierungseinheiten auf einen gleichen Bezugsframe zeigen,
- jeder der Zwischencodierungseinheiten (uci) Prädiktionsdaten zuzuweisen, die abhängig von den Prädiktionsdaten der ersten Codierungseinheit(en) konstruiert sind, die zusammengeführt ist(sind), um die Zwischencodierungseinheit zu bilden, und

- die decodierten Videodaten im zweiten Format (F2) neu zu codieren, indem die zweite Codierungsstruktur (SC2i) abhängig von der Zwischencodierungsstruktur (SCIi) konstruiert wird.

11. Telekommunikationsausrüstung (2), die eine Schnittstelle (I1) aufweist, um einen Videodaten in einem ersten Format enthaltenden Bitstrom zu empfangen, **dadurch gekennzeichnet, dass** sie ein Transcodierungsmodul (4) nach Anspruch 10 enthält.

## Claims

1. Method for transcoding a binary stream (FB1) containing video data in a first format (F1) into a binary stream (FB2) containing said video data in a second format (F2), the video data comprising frames (Tli, T2i), said frames being, in the first format, divided into first coding units (ucl) each covering a region of the frame and defining a first coding structure (SC1i) for each frame, and being, in the second format (F2), divided into second coding units (uc2) defining a second coding structure (SC2i) for each frame, the method comprising:

  - a step of decoding the binary stream, yielding decoded video data, data representative of the first coding structure (SC1i) of the frames and, for all or some of the first coding units (ucl), prediction data, the prediction data of at least one first coding unit (ucl) comprising a motion vector (VM), and
  - a re-encoding step in which the decoded video data are encoded in the second format (F2),

  **characterized in that**, in the re-encoding step, for at least one frame of the decoded video data:

  - an intermediate coding structure (SCIi) is constructed, comprising intermediate coding units (uci) each constructed so as to correspond to the fusion of one or more first coding units (ucl) covered by said intermediate coding unit when a first condition (C1) is met, according to which first condition at least one dissimilarity metric (M) associated with the intermediate coding unit under consideration and determined based on motion vectors of said first coding units is below a predetermined threshold (T), at least one intermediate coding unit (uci) corresponding to the fusion of at least two first coding units (ucl), the dissimilarity metric (M) between the motion vectors of first coding units being expressed in the form $\sqrt{\sigma_x^2 + \sigma_y^2}$ and being determined as being below said predetermined threshold when the relationship $\sqrt{\sigma_x^2 + \sigma_y^2} \leq T$ is met, where $\sigma_x$ and $\sigma_y$ are standard deviations estimated over all of the components of the motion vectors of the first coding units (ucl) in a horizontal direction and in a vertical direction, respectively, of the frame comprising said coding units, and T is said predetermined threshold,

  - the motion vectors (VM) of some or all of the first coding units each pointing to a reference frame ($T_{ref}$), it is determined whether the first condition (C1) is met only if a second condition (C2) is met, according to which second condition the motion vectors (VM) of the first coding units under consideration point to one and the same reference frame,
  - each of the intermediate coding units (uci) is assigned prediction data constructed based on the prediction data of the one or more first coding units fused so as to form said intermediate coding unit, and
  - the decoded video data are re-encoded in the second format (F2) by constructing the second coding structure (uc2) based on the intermediate coding structure (SCIi).

2. Method according to Claim 1, **characterized in that**, in order to construct the intermediate coding structure:

  - the frame or said frames is or are divided into intermediate coding units (uci) of a chosen maximum size ($ti_{max}$), each intermediate coding unit of maximum size covering a set of first coding units within the first coding structure,
  - a) for each intermediate coding unit of maximum size, and based on the prediction data of the first coding units (ucl) covered by said intermediate coding unit (uci) of maximum size ($ti_{max}$), the one or more dissimilarity metrics (M) respectively associated with each of the elements of a first set of predetermined partitions (P) of said intermediate coding unit of maximum size is or are evaluated in a predetermined order,
  - b) for each intermediate coding unit (uci), said intermediate coding unit (uci) is formed by giving said intermediate coding unit the first partition from among said first set of predetermined partitions (P) for which the single dissimilarity metric or else a proportion greater than a chosen non-zero value of the associated dissimilarity metrics is below the predetermined threshold, if said first partition exists,
  - c) if said first partition does not exist for said coding unit of maximum size, said intermediate coding unit is subdivided into n intermediate coding units (uci) of size strictly smaller than said chosen maximum size (ti$_{max}$), and

- d) steps a), b) and c) are repeated for each newly formed intermediate coding unit until obtaining intermediate coding units having a predetermined minimum size (ti$_{min}$).

**3.** Method according to Claim 2, **characterized in that** said set of predetermined partitions comprises at least one partition into m regions of sizes strictly smaller than the size of the intermediate coding unit under consideration, a dissimilarity metric (M) being associated with each of said m regions.

**4.** Method according to any one of Claims 1 to 3, **characterized in that** the motion vectors (VM) of all or some of the first coding units (ucl) each point to a reference frame (T$_{ref}$), and **in that**, for at least one of said first coding units, at least one weighted motion vector is constructed based on a motion vector (VM) of said first coding unit and on the time interval between the frame of the first coding unit under consideration and the reference frame pointed to by said motion vector, and **in that** a similarity metric associated with one or more coding units covered by the intermediate coding unit under consideration is determined based on one or more weighted motion vectors.

**5.** Method according to any one of the preceding claims, **characterized in that** the video data frames have associated with them two reference lists of frames to one and/or to the other of which the motion vectors of the coding units return, and **in that** the meeting of the first condition (C1) or, when it is applied, of the second condition (C2), is analysed only if a third condition (C3) is met, according to which third condition the motion vectors (VM) of the corresponding first coding units point to reference frames belonging to the reference list or the same reference lists.

**6.** Method according to Claim 5, **characterized in that** the first condition (C1), the second condition (C2) and/or the third condition (C3) are/is analysed only if a fourth condition (C4) is met, according to which fourth condition the prediction data of the corresponding first coding units (ucl) all comprise at least one motion vector (VM).

**7.** Method according to any one of the preceding claims, **characterized in that**, in the re-encoding step, the or each frame is divided into second coding units (uc2) of a chosen maximum size (t2$_{maxc}$), and, for each second coding unit (uc2) of maximum size, said second coding unit of chosen maximum size is coded in accordance with the following scenarios:

- e) if the intermediate coding unit that is collocated, that is to say covering the same region of the frame, in the intermediate coding structure (SCli) does not comprise any intermediate coding unit (uci) of strictly smaller size, said second coding unit (uc2) is coded using a partition chosen from among a predetermined second set of partitions (P2) based on the partition of the collocated intermediate coding unit, said second set (P2) not including a subdivision of said second coding unit into second coding units of strictly smaller size, said chosen partition minimizing a chosen coding cost function (J),

- f) if the collocated intermediate coding unit comprises intermediate coding units of strictly smaller size, consideration is given to a predetermined third set of partitions (P3) and at least one subdivision of said second coding unit into second coding units of strictly smaller sizes, the coding structure is determined from among said third set of partitions (P3) and said at least one subdivision that yields a minimum value of said coding cost function (J), and:

  - if said coding structure is a partition of the third set of partitions (P3), the intermediate coding unit is coded using said coding structure,
  - if said coding structure is the or one of said at least one subdivision into second coding units of strictly smaller sizes, the second coding unit is divided in accordance with said subdivision and steps e) and f) are applied to each of the second coding units of said newly formed subdivision, until considering second coding units having a predetermined minimum size of the collocated intermediate coding units.

**8.** Method according to any one of the preceding claims, **characterized in that** the second format is the HEVC format, and **in that** the first format is the MPEG-2 or AVC format.

**9.** Computer program, **characterized in that** it comprises instructions for implementing the method according to one of Claims 1 to 8 when this program is executed by a processor.

**10.** Transcoding module designed to transcode a binary stream (FB1) containing video data in a first format (F1) into a binary stream (FB2) containing said video data in a second format (F2), the video data comprising frames (T1i, T2i), said frames being, in the first format, divided into first coding units (ucl) each covering a region of the frame and defining a first coding structure (SC1i) for each frame, and being, in the second format (F2), divided into second coding units (uc2) defining a second coding structure (SC2i) for each frame, the transcoding module comprising:

- a decoding module (6) designed to decode the binary stream, yielding decoded video data, data representative of the first coding structures and, for all or some of the first coding units, prediction data, the prediction data of at least one coding unit comprising a motion vector, and
- a re-encoding module (8) designed to encode the decoded video data in the second format (F2),

**characterized in that** in the re-encoding module (8) is configured to:

- for at least one frame of the video data decoded in the first format (F1), construct an intermediate coding structure (SCIi) comprising intermediate coding units (uci) each constructed so as to correspond to the fusion of one or more first coding units (ucl) covered by said intermediate coding unit (uci) in response to a first condition (C1) being met, according to which first condition at least one dissimilarity metric (M) associated with the intermediate coding unit under consideration and determined based on motion vectors of said first coding units is below a predetermined threshold (T), at least one intermediate coding unit (uci) corresponding to the fusion of at least two first coding units (ucl), the dissimilarity metric (M) between the motion vectors of first coding units being expressed in the form $\sqrt{\sigma x^2 + \sigma y^2}$ and being determined as being below said predetermined threshold when the relationship $\sqrt{\sigma x^2 + \sigma y^2} \leq T$ is met, where $\sigma x$ and $\sigma y$ are standard deviations estimated over all of the components of the motion vectors of the first coding units (ucl) in a horizontal direction and in a vertical direction, respectively, of the frame comprising said coding units, and T is said predetermined threshold,
- the motion vectors (VM) of all or some of the first coding units each pointing to a reference frame ($T_{ref}$), determine whether the first condition (C1) is met only if a second condition (C2) is met, according to which second condition the motion vectors (VM) of the first coding units under consideration point to one and the same reference frame,
- assign each of the intermediate coding units (uci) prediction data constructed based on the prediction data of the one or more first coding units fused so as to form said intermediate coding unit, and
- re-encode the decoded video data in the second format (F2) by constructing the second coding structure (SC2i) based on the intermediate coding structure (SCIi).

11. Telecommunications equipment (2) comprising an interface (II) for receiving a binary stream containing video data in a first format, **characterized in that** it comprises a transcoding module (4) according to Claim 10.

**FIG. 1**

**FIG. 3**

{ Partition
VM
Mode
Res. }

A

SC1i

**FIG. 2a**

UC$_1$

SC2i

**FIG. 2b**

UC$_2$

C

SCIi

**FIG. 2c**

UC$_i$

FIG. 4

(1)  (2)  (3)  (4)  (5)  (6)  (7)

FIG. 5

A1

A2

A3

A4

A5

A6

A7

# FIG. 6

SCIi

SC2i

B1

B2

# FIG. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014137268 A1

**Littérature non-brevet citée dans la description**

- A complexity-scalable transcoder from H.264/AVC to the new HEVC codec. **EDUARDO PEIXOTO et al.** IMAGE PROCESSING (ICIP), 2012 19TH IEEE INTERNATIONAL CONFERENCE ON. IEEE, 30 Septembre 2012, 737-740